(19) Europäisches Patentamt
European Patent Office
Office européen des brevets

(11) **EP 3 307 006 B1**

(12) **EUROPEAN PATENT SPECIFICATION**

(45) Date of publication and mention
of the grant of the patent:
**04.09.2019 Bulletin 2019/36**

(21) Application number: **16827139.3**

(22) Date of filing: **22.06.2016**

(51) Int Cl.:
*H04W 72/12* $^{(2009.01)}$    *H04W 52/16* $^{(2009.01)}$
*H04W 52/20* $^{(2009.01)}$    *H04W 52/24* $^{(2009.01)}$
*H04W 52/32* $^{(2009.01)}$    *H04W 52/36* $^{(2009.01)}$
*H04W 72/08* $^{(2009.01)}$    *H04L 5/00* $^{(2006.01)}$
*H04B 1/7105* $^{(2011.01)}$    *H04B 1/7107* $^{(2011.01)}$
*H04L 25/02* $^{(2006.01)}$    *H04W 72/04* $^{(2009.01)}$
*H04W 92/20* $^{(2009.01)}$

(86) International application number:
**PCT/CN2016/086760**

(87) International publication number:
**WO 2017/012448 (26.01.2017 Gazette 2017/04)**

(54) **SIGNAL TRANSMISSION AND DEMODULATION METHOD, DEVICE, AND SYSTEM**

VERFAHREN, VORRICHTUNG UND SYSTEM ZUR SIGNALÜBERTRAGUNG UND DEMODULATION

PROCÉDÉ, DISPOSITIF ET SYSTÈME D'ÉMISSION ET DE DÉMODULATION DE SIGNAL

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **20.07.2015 CN 201510428331**

(43) Date of publication of application:
**11.04.2018 Bulletin 2018/15**

(73) Proprietor: **Huawei Technologies Co., Ltd.**
**Longgang District**
**Shenzhen, Guangdong 518129 (CN)**

(72) Inventor: **WANG, Hao**
**Shenzhen**
**Guangdong 518129 (CN)**

(74) Representative: **Goddar, Heinz J.**
**Boehmert & Boehmert**
**Anwaltspartnerschaft mbB**
**Pettenkoferstrasse 22**
**80336 München (DE)**

(56) References cited:
**WO-A1-2014/165655**    **CN-A- 102 118 870**
**CN-A- 102 325 378**    **CN-A- 105 050 193**
**US-A1- 2013 336 273**    **US-A1- 2014 016 620**
**US-A1- 2014 301 292**    **US-A1- 2015 016 331**

- **GREGORY MOROZOV ET AL: "Blind Maximum Likelihood Interference Mitigation for PDCCH of 3GPP LTE/LTE-A", 2014 IEEE 79TH VEHICULAR TECHNOLOGY CONFERENCE (VTC 2014-SPRING) : SEOUL, KOREA, 18 - 21 MAY 2014, 1 May 2014 (2014-05-01), pages 1-5, XP055376209, Piscataway, NJ DOI: 10.1109/VTCSpring.2014.7022847 ISBN: 978-1-4799-4482-8**

**Description**

**TECHNICAL FIELD**

Embodiments of the present invention relate to the field of communications technologies, and in particular, to a signal sending method, a signal demodulation method, a device, and a system.

**BACKGROUND**

In a communications system, continuous growth of communication requirements drives continuous evolution of radio transmission technologies. At present, in a Long Term Evolution (LTE) project, an over-the-air access technology in a 3rd Generation Partnership Project is improved and enhanced, to improve performance of a cell edge user, and increase a cell capacity.

In an LTE system, a physical downlink control channel (PDCCH) signal may be divided into a pilot signal and a control signal used for channel measurement. The control signal includes indication information that indicates specific locations of downlink and uplink air interface resources of a terminal. A physical downlink shared channel (PDSCH) is a channel mainly for carrying user terminal data. Before demodulating a PDSCH signal, the terminal needs to correctly demodulate, from the PDCCH signal, a control signal that is sent by a base station, and then obtain, according to indication information in the control signal, data information that is corresponding to a current terminal and in the PDSCH signal. Therefore, PDCCH signal demodulation performance determines a user throughput.

In the LTE system, the base station is of high density and is heterogeneous, so that the PDCCH signal and the PDSCH signal suffer relatively severe co-channel interference between cells or multiple terminals. To reduce the co-channel interference, the terminal usually demodulates the PDSCH signal by using a joint minimum mean square error (MMSE) algorithm, symbol level interference cancellation (SLIC), a maximum likelihood (ML) algorithm, or the like that can effectively reduce the co-channel interference. Therefore, better PDSCH signal demodulation performance can be achieved, and efficiency of correctly demodulating data can be relatively high. However, for the PDCCH signal, the terminal usually demodulates the PDCCH signal by using maximum ratio combining (MRC) or interference rejection combining (IRC) that has a relatively poor capability for rejecting the co-channel interference. Therefore, PDCCH signal demodulation performance is relatively poor, and efficiency of correctly demodulating the PDCCH signal by the terminal is relatively low. Therefore, the PDSCH signal demodulation performance is relatively good, but because the PDCCH signal demodulation performance is relatively poor and does not match the PDSCH signal demodulation performance, the user throughput is reduced.

US 2015/016331 A1 discloses a method of receiving downlink signal at a user equipment in a wireless communication system. The method includes receiving an information related to a reference signal of a neighbor cell from a serving cell and performing an interference handling in resources in accordance with the information related to the reference signal of the neighbor cell, wherein the information related to the reference signal of the neighbor cell comprises at least one selected from the group consisting of a cell ID (identity) of the neighbor cell, the number of ports for transmitting the reference signal of the neighbor cell, an frequency information for transmitting the reference signal of the neighbor cell and an time information for transmitting the reference signal of the neighbor cell.

US 2014/301292 A1 discloses that for an enhanced physical downlink control channel (EPDCCH), unlimited traffic-to-pilot ratio (TPR) variations across resource elements of a physical resource block (PRB) pair are problematic. An apparatus is provided. The apparatus identifies a plurality of resource elements of at least one PRB pair for transmitting one or more control channels, divides the plurality of identified resource elements into one or more groups, and restricts a plurality of resource elements in a respective group to a TPR.

Gregory Morozov et al: "Blind Maximum Likelihood Interference Mitigation for PDCCH of 3GPP LTE/LTE-A", 2014 IEEE 79th Vehicular Technology Conference, Seoul, Korea, 18-21 May 2014 discloses a ML receiver for PDCCH with ability of blind power boosting estimation and interference hit detection.

**SUMMARY**

The present invention provide a signal sending method of claim 1, a signal demodulation method of claim 4, a device of claims 8 and 11, and a system of 15, so as to resolve a prior-art problem of a low user throughput caused by mismatch between poor PDCCH signal demodulation performance and PDSCH signal demodulation performance. Possible implementation manners are disclosed in the dependent claims.

According to a first aspect, a signal sending method is provided, and the method includes:

obtaining, by a base station of a serving cell, a first power ratio restriction set preset by a base station of at least one interference cell, where an element in the first power ratio restriction set is a preset value of a first power ratio, the first power ratio is a ratio of power of a first original control signal to power of a first original pilot signal in a first original physical downlink control channel PDCCH signal sent by the base station of the interference cell by using a first transmission channel;

sending, by the base station of the serving cell, a second power ratio restriction set preset by the base station of the serving cell and the first power ratio restriction set to the terminal, where an element in the second power ratio restriction set is a preset value of a second power ratio, the second power ratio is a ratio of power of a second original control signal to power of a second original pilot signal in a second original PDCCH signal sent by the base station of the serving cell; and

sending, by the base station of the serving cell, the second original PDCCH signal to the terminal, where a current value of the second power ratio of the second original PDCCH signal is an element selected from the second power ratio restriction set.

With reference to the first aspect, in a first possible implementation of the first aspect, the sending, by the base station of the serving cell, a second power ratio restriction set preset by the base station of the serving cell and the first power ratio restriction set to the terminal includes:

sending, by the base station of the serving cell, the preset second power
ratio restriction set and the first power ratio restriction set to the terminal by using higher layer signaling.

With reference to the first aspect or the first possible implementation of the first aspect, in a second possible implementation of the first aspect, the sending, by the base station of the serving cell, the second original PDCCH signal to the terminal includes:

grouping, by the base station of the serving cell, multiple resource units corresponding to the second original PDCCH signal corresponding to the terminal into a resource unit group;

selecting, by the base station of the serving cell, an element from the second power ratio restriction set for the resource unit group according to a preset rule; and

configuring, by the base station of the serving cell, the second power ratio of the second original PDCCH signal in the resource unit group to the current value according to the selected element, and sending the second original PDCCH signal to the terminal by using the resource unit group.

According to a second aspect, a signal demodulation method is provided, and the method includes:

receiving, by a terminal, a first power ratio restriction set preset by a base station of at least one interference cell and sent by a base station of a serving cell and a second power ratio restriction set preset by the base station of the serving cell and sent by the base station of the serving cell, where an element in the first power ratio restriction set is a preset value of the first power ratio, the first power ratio is a ratio of power of a first original control signal to power of a first original pilot signal in a first original physical downlink control channel PDCCH signal sent by the base station of the interference cell by using a first transmission channel, an element in the second power ratio restriction set is a preset value of a second power ratio, the second power ratio is a ratio of power of a second original control signal to power of a second original pilot signal in a second original PDCCH signal sent by the base station of the serving cell by using a second transmission channel;

receiving, by the terminal, a PDCCH signal, where the PDCCH signal includes a second PDCCH signal that is transmitted to the terminal by using the second transmission channel and originated from the second PDCCH original signal sent by the base station of the serving cell and a first PDCCH signal that is transmitted to the terminal by using the first transmission channel and originated from the first original PDCCH signal sent by the base station of the interference cell; and

demodulating, by the terminal, the PDCCH signal according to the first power ratio restriction set and the second power ratio restriction set, to obtain the second original PDCCH signal.

With reference to the second aspect, in a first possible implementation of the second aspect, the receiving, by a terminal, a first power ratio restriction set preset by a base station of at least one interference cell and sent by a base station of a serving cell and a second power ratio restriction set preset by the base station of the serving cell and sent by the base station of the serving cell includes:

receiving, by the terminal, higher layer signaling sent by the base station of the serving cell, where the higher layer signaling carries the first power ratio restriction set and the second power ratio restriction set.

With reference to the second aspect or the first possible implementation of the second aspect, in a second possible implementation of the second aspect, the demodulating, by the terminal, the PDCCH signal according to the first power ratio restriction set and the second power ratio restriction set, to obtain the second original PDCCH signal includes:

obtaining, by the terminal, the first power ratio and the second power ratio according to a preset estimation algorithm, the first power ratio restriction set, and the second power ratio restriction set;
obtaining, by the terminal, a first channel matrix of the first transmission channel and a second channel matrix of the second transmission channel according to the first power ratio and the second power ratio; and
demodulating, by the terminal, the PDCCH signal according to the first channel matrix and the second channel matrix by using a preset demodulation algorithm, to obtain the second original PDCCH signal.

With reference to the second possible implementation of the second aspect, in a third possible implementation of the second aspect, the preset estimation algorithm includes a generalized maximum likelihood algorithm or a minimum energy algorithm.

According to a third aspect, a base station is provided, including:

an obtaining unit, configured to obtain a first power ratio restriction set preset by a base station of at least one interference cell, where an element in the first power ratio restriction set is a preset value of a first power ratio, the first power ratio is a ratio of power of a first original control signal to power of a first original pilot signal in a first original physical downlink control channel PDCCH signal sent by the base station of the interference cell by using a first transmission channel; and
a sending unit, configured to send a second power ratio restriction set preset by the base station of the serving cell and the first power ratio restriction set to the terminal, where an element in the second power ratio restriction set is a preset value of a second power ratio, the second power ratio is a ratio of power of a second original control signal to power of a second original pilot signal in a second original PDCCH signal sent by the base station of the serving cell; where
the sending unit is further configured to send the second original PDCCH signal to the terminal, where a current value of the second power ratio of the second original PDCCH signal is an element selected from the second power ratio restriction set.

With reference to the third aspect, in a first possible implementation of the third aspect, the sending unit is specifically configured to:
send the preset second power ratio restriction set and the first power ratio restriction set to the terminal by using higher layer signaling.

With reference to the third aspect or the first possible implementation of the third aspect, in a second possible implementation of the third aspect, the sending unit is specifically configured to:

group multiple resource units corresponding to the second original PDCCH signal corresponding to the terminal into a resource unit group;
select an element from the second power ratio restriction set for the resource unit group according to a preset rule; and
configure the second power ratio of the second original PDCCH signal in the resource unit group to the current value according to the selected element, and send the second original PDCCH signal to the terminal by using the resource unit group.

According to a fourth aspect, a terminal is provided, including:

a receiving unit, configured to receive a first power ratio restriction set preset by a base station of at least one interference cell and sent by a base station of a serving cell and a second power ratio restriction set preset by the base station of the serving cell and sent by the base station of the serving cell, where an element in the first power ratio restriction set is a preset value of the first power ratio, the first power ratio is a ratio of power of a first original control signal to power of a first original pilot signal in a first original physical downlink control channel PDCCH signal sent by the base station of the interference cell by using a first transmission channel, an element in the second power ratio restriction set is a preset value of a second power ratio, the second power ratio is a ratio of power of a second original control signal to power of a second original pilot signal in a second original PDCCH signal sent by the base station of the serving cell by using a second transmission channel, where
the receiving unit is further configured to receive a PDCCH signal, where the PDCCH signal includes a second PDCCH signal that is transmitted to the terminal by using the second transmission channel and originated from the second original signal sent by the base station of the serving cell and a first PDCCH signal that is transmitted to the terminal by using the first transmission channel and originated from the first original PDCCH signal sent by the base station of the interference cell; and

a processing unit, configured to demodulate the PDCCH signal according to the first power ratio restriction set and the second power ratio restriction set, to obtain the second original PDCCH signal.

With reference to the fourth aspect, in a first possible implementation of the fourth aspect, the receiving unit is specifically configured to:

receive higher layer signaling sent by the base station of the serving cell, where the higher layer signaling carries the first power ratio restriction set and the second power ratio restriction set.

With reference to the fourth aspect or the first possible implementation of the fourth aspect, in a second possible implementation of the fourth aspect, the processing unit is specifically configured to:

obtain the first power ratio and the second power ratio according to a preset estimation algorithm, the first power ratio restriction set, and the second power ratio restriction set;

obtain a first channel matrix of the first transmission channel and a second channel matrix of the second transmission channel according to the first power ratio and the second power ratio; and

demodulate the PDCCH signal according to the first channel matrix and the second channel matrix by using a preset demodulation algorithm, to obtain the second original PDCCH signal.

With reference to the second possible implementation of the fourth aspect, in a third possible implementation of the fourth aspect, the preset estimation algorithm includes a generalized maximum likelihood algorithm or a minimum energy algorithm.

According to a fifth aspect, a system is provided, including the base station in any implementation of the third aspect and the terminal in any implementation of the fourth aspect.

The embodiments of the present invention provide a signal sending method, a signal demodulation method, a device, and a system. A base station of a serving cell obtains a first power ratio restriction set preset by at least one interference cell, sends the first power ratio restriction set and a second power ratio restriction set preset by the base station of the serving cell to a terminal, and configures, according to a preset power ratio in the second power ratio restriction set, a ratio of power of a second original control signal to power of a second original pilot signal, where the second original control signal and the second original pilot signal are sent to the terminal, so that the terminal can obtain a first power ratio and a second power ratio by means of estimation according to the first power ratio restriction set and the second power ratio restriction set, to obtain a first channel matrix and a second channel matrix, and a PDCCH signal in a resource unit is demodulated by using an algorithm such as MMSE, SLIC, or ML that can effectively reduce co-channel interference, to obtain a second original PDCCH signal. Therefore, PDCCH signal demodulation performance can be improved.

## BRIEF DESCRIPTION OF DRAWINGS

To describe the technical solutions in the embodiments of the present invention more clearly, the following briefly describes the accompanying drawings required for describing the embodiments. Apparently, the accompanying drawings in the following description show merely some embodiments of the present invention, and persons of ordinary skill in the art may still derive other drawings from these accompanying drawings without creative efforts.

FIG. 1 is a schematic diagram of a basic network architecture of an LTE system;
FIG. 2 is a schematic diagram of a network architecture of another LTE system;
FIG. 3 is a schematic structural diagram of a resource block in an LTE system according to an embodiment of the present invention;
FIG. 4 is a schematic flowchart of a method according to an embodiment of the present invention;
FIG. 5 is a schematic flowchart of another method according to an embodiment of the present invention;
FIG. 6 is a schematic flowchart of another method according to an embodiment of the present invention;
FIG. 7 is a schematic flowchart of another method according to an embodiment of the present invention;
FIG. 8 is a schematic structural diagram of a base station according to an embodiment of the present invention;
FIG. 9 is a schematic structural diagram of a terminal according to an embodiment of the present invention;
FIG. 10 is a schematic structural diagram of another base station according to an embodiment of the present invention;
FIG. 11 is a schematic structural diagram of another terminal according to an embodiment of the present invention; and
FIG. 12 is a schematic structural diagram of a system according to an embodiment of the present invention.

**DESCRIPTION OF EMBODIMENTS**

The following clearly and completely describes the technical solutions in the embodiments of the present invention with reference to the accompanying drawings in the embodiments of the present invention. Apparently, the described embodiments are merely some but not all of the embodiments of the present invention. All other embodiments obtained by persons of ordinary skill in the art based on the embodiments of the present invention without creative efforts shall fall within the protection scope of the present invention.

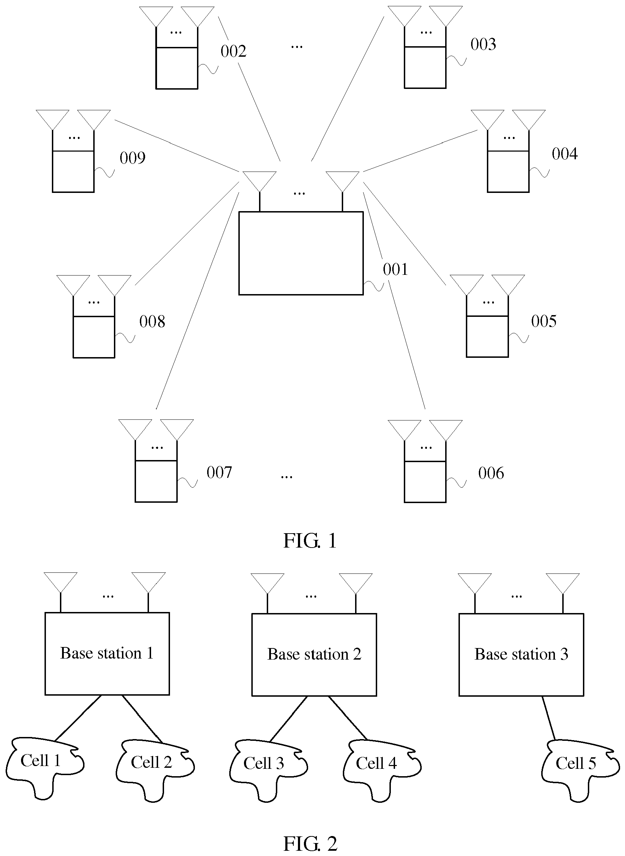

In an LTE system, an orthogonal frequency division multiplexing (OFDM) technology and a multiple-input multiple-output (MIMO) technology are usually used as standards for radio network evolution. For a basic network architecture in which the OFDM technology is used in the LTE system to transmit a signal by using multiple transmit antennas and multiple receive antennas, refer to FIG. 1. 001 may be a base station (or an access point, or the like), and 002 to 009 may be terminals (or mobile stations, or remote stations, or user equipment, or the like). The base station 001 and the terminals 002 to 009 may each include one or multiple antennas. The terminal may be user equipment such as a mobile phone, an iPad, or a personal digital assistant.

One physical base station may manage one or more cells. There is an interface (such as an X2 interface) for mutual communication between different base stations. Referring to a schematic diagram of a network architecture of an LTE system shown in FIG. 2, when a cell 1 managed by a base station 1 is a serving cell, a cell 2 managed by the same base station may be an interference cell for the serving cell, and a cell managed by a different base station may be an interference cell for the serving cell. For example, a cell 3 and a cell 4 managed by a base station 2 and a cell 5 managed by a base station 3 may be interference cells for the serving cell. A cell is in one-to-one correspondence with a cell identification (ID), and a cell ID is used to uniquely identify a cell. There is an interface 1 between the base station 1 and the base station 2, there is an interface 2 between the base station 1 and the base station 3, and there is an interface 3 between the base station 2 and the base station 3.

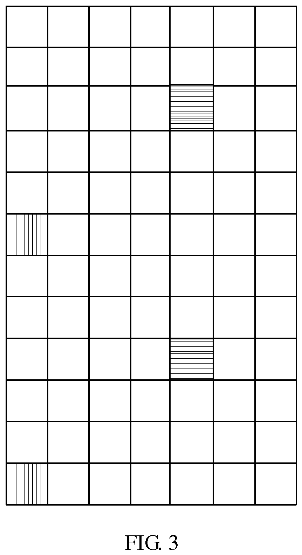

In the LTE system, an original PDCCH signal sent by a base station is transmitted on a physical transmission channel by using a resource block shown in FIG. 3. Each small square represents one resource unit, and an original PDCCH signal is divided by resource units. One resource unit may include PDCCH signals sent by multiple base stations.

A PDCCH signal received by a terminal may include multiple resource units. An expression of a signal in any resource unit may be represented by formula 1.

$$y = \hat{\boldsymbol{h}}_0 \boldsymbol{x}_0 + \sum_i \hat{\boldsymbol{h}}_i \boldsymbol{x}_i + \boldsymbol{n} \qquad \text{Formula 1}$$

y may represent the received PDCCH signal. $\boldsymbol{x}_0$ may represent a second original PDCCH signal sent by a base station of a serving cell, and may be specifically a second original pilot signal or a second original control signal in the second original PDCCH signal. The second original control signal may specifically include information such as scheduling control, a transmission format, resource allocation, uplink scheduling permission, power control, and uplink re-transmission. $\hat{\boldsymbol{h}}_0$ may represent a second channel matrix of a second transmission channel between the base station of the serving cell and the terminal, and the second channel matrix may be understood as a transmission feature of the second transmission channel for the second original control signal in the resource unit. $\hat{\boldsymbol{h}}_0 x_0$ may represent a second PDCCH signal that is transmitted to the terminal by using the second transmission channel and originated from the second original PDCCH signal. $\boldsymbol{x}_i$ may represent a first original pilot signal or a first original control signal in a first original PDCCH signal sent by a base station of an $i^{th}$ interference cell in at least one interference cell. The first original control signal may also include information such as scheduling control, a transmission format, resource allocation, uplink scheduling permission, power control, and uplink re-transmission. There may be N (N is a positive integer) interference cells, which are usually neighboring cells that may interfere with the serving cell. A value of i is from 1 to N. $\hat{\boldsymbol{h}}_i$ may represent a first channel matrix of a first transmission channel between the base station of the $i^{th}$ interference cell and the terminal, and the first channel matrix may be understood as a transmission feature of the first transmission channel for the first original control signal in the resource unit. $\hat{\boldsymbol{h}}_i x_i$ may represent a first PDCCH signal that is transmitted to the terminal by using the first transmission channel and originated from the first original PDCCH signal sent by the base station of the $i^{th}$ interference cell. It should be emphasized that, when there are multiple interference cells, there may also be multiple base stations of the interference cells. There may also be multiple first original PDCCH signals, first original pilot signals, first original control signals, first PDCCH signals, first transmission channels, first channel matrices, and the like that are separately corresponding to different interference cells. $\sum_i \hat{\boldsymbol{h}}_i \boldsymbol{x}_i$ may represent a sum of N first PDCCH signals that are in first original PDCCH signals sent by all interference cells and that are respectively transmitted to the terminal by using corresponding first transmission channels, and n may represent white noise.

It should be noted that, in formula 1, when a quantity of antennas used for sending the second original PDCCH signal by the base station of the serving cell is 1, $x_0$ represents a vector signal; when the quantity of antennas used for sending the second original PDCCH signal by the base station of the serving cell is greater than 1, $x_0$ represents a vector signal matrix. Likewise, when a quantity of antennas used for sending the first original PDCCH signal by the base station of the interference cell is 1, $x_i$ represents a vector signal; when the quantity of antenna used for sending the first original PDCCH signal by the base station of the interference cell is greater than 1, $x_i$ represents a vector signal matrix.

In addition, in a resource block, a location of a resource unit of the second original pilot signal is corresponding to a serving cell ID, and the location is usually fixed, such as a resource unit filled with vertical lines in FIG. 3; a location of a resource unit of the first original pilot signal is corresponding to the serving cell ID, and the location is also usually fixed, such as a resource unit filled with horizontal lines in FIG. 3.

Because a user throughput is affected when PDCCH signal demodulation performance is poor, the PDCCH signal may be demodulated by using an algorithm such as MMSE, SLIC, or ML that can effectively reduce co-channel interference, to improve the PDCCH signal demodulation performance. A PDCCH signal demodulation process is mainly a process of obtaining the second original PDCCH signal $x_0$ from the received PDCCH signal y in formula 1. It may be learned from formula 1 that, when the second channel matrix $\hat{h}_0$ and the first channel matrix $\hat{h}_i$ are obtained, the second original PDCCH signal $x_0$ may be obtained from y by means of demodulation. For example, an expression for performing demodulation by using the MMSE algorithm may be represented by formula 2.

$$x_0 = \hat{h}_0^* \left( \hat{h}_0 \hat{h}_0^* + \sum_i \hat{h}_i \hat{h}_i^* + \sigma^2 I \right)^{-1} y \qquad \text{Formula 2}$$

$x_0$ represents the second original PDCCH signal that is in the resource unit and that is obtained by means of demodulation. $\hat{h}_0$ represents the second channel matrix, and $\hat{h}_0^*$ represents a conjugate transpose matrix of $\hat{h}_0$. $\hat{h}_i$ represents the first channel matrix, and $\hat{h}_i^*$ represents a conjugate transpose matrix of $\hat{h}_i$. $\sigma^2$ represents ground noise power, $I$ represents a unit matrix, and $y$ represents the PDCCH signal in the resource unit received by the terminal.

$$\left( \hat{h}_0 \hat{h}_0^* + \sum_i \hat{h}_i \hat{h}_i^* + \sigma^2 I \right)^{-1}$$ represents an inverse matrix of $$\left( \hat{h}_0 \hat{h}_0^* + \sum_i \hat{h}_i \hat{h}_i^* + \sigma^2 I \right)$$.

Because $x_0$ in the resource unit may represent the second original pilot signal in the second original PDCCH signal or the second original control signal in the second original PDCCH signal, and the second original pilot signal is known, the second original pilot signal does not need to be obtained by means of demodulation, and $x_0$ obtained by means of demodulation may be the second original control signal. In addition, it may be learned from formula 1 that a signal of the interference cell received by the terminal is an interference signal of the second original PDCCH signal obtained by the terminal by means of demodulation.

In the signal sending and demodulation method according to the embodiments of the present invention, a base station mainly sends a second power ratio restriction set and a first power ratio restriction set to a terminal, so that the terminal can obtain, by means of estimation according to the second power ratio restriction set and the first power ratio restriction set, a ratio $\rho_0$ of power of a second original control signal to power of a second original pilot signal and a ratio $\rho_i$ of power of a first original control signal to power of a first original pilot signal, to obtain $\hat{h}_0$ and $\hat{h}_i$. Therefore, a PDCCH signal y in a resource unit is demodulated by using an algorithm such as MMSE, SLIC, or ML that can effectively reduce co-channel interference, to improve PDCCH signal demodulation performance. However, in the prior art, a ratio of power of a first original control signal to power of a first original pilot signal may be any value, and a ratio of power of a second original control signal to power of a second original pilot signal may also be any value, where the first original control signal and the first original pilot signal are sent by a base station of an interference cell, and the second original control signal and the second original pilot signal are sent by a base station of a serving cell. Therefore, obtaining a first power ratio and a second power ratio from any possible value by a terminal by means of autonomous estimation is extremely complex, and accuracy can hardly be ensured. Consequently, it is difficult to obtain a first channel matrix and a second channel matrix, and it is difficult to demodulate a PDCCH signal by using an algorithm such as MMSE, SLIC, or ML that can effectively reduce co-channel interference. Specifically, for an implementation process of demodulating a PDCCH signal in any resource unit by using the method provided in the embodiments of the present invention, refer to descriptions in the following embodiments.

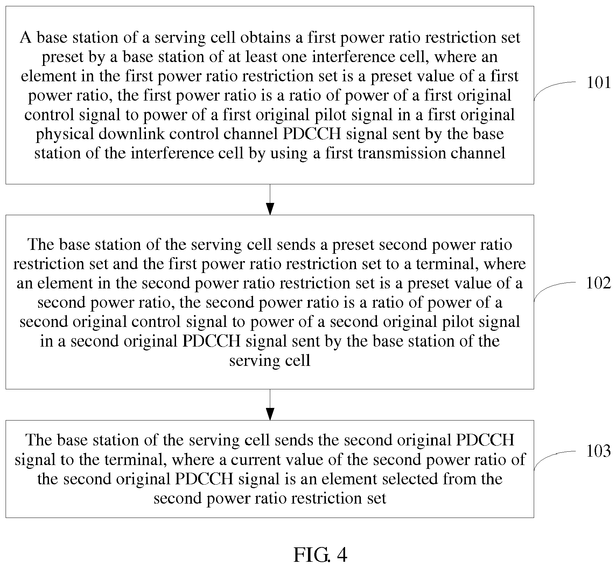

An embodiment of the present invention provides a signal sending method. Referring to FIG. 4, the method may mainly include the following steps.

101. A base station of a serving cell obtains a first power ratio restriction set preset by a base station of at least one interference cell, where an element in the first power ratio restriction set is a preset value of a first power ratio, the first power ratio is a ratio of power of a first original control signal to power of a first original pilot signal in a first original physical downlink control channel PDCCH signal sent by the base station of the interference cell by using a first transmission channel.

The base station of the interference cell may limit the ratio of the power of the first original control signal to the power of the first original pilot signal in the element in the first power ratio restriction set according to the preset first power ratio restriction set, where the first original control signal and the first original pilot signal are in the first original PDCCH signal sent by the base station of the interference cell. Usually, there may be few elements in the first power ratio restriction set, such as 3 or 4. This may be specifically set according to requirements. The first power ratio restriction set is corresponding to an interference cell ID, and any interference cell is corresponding to one first power ratio restriction set. Different interference cell IDs (that is, different interference cells) may be corresponding to a same first power ratio restriction set or different first power ratio restriction sets.

For example, a network architecture shown in FIG. 2 is used as an example. If a cell 1 is a serving cell, a base station 1 is a base station of the serving cell. In addition, the base station 1 is also a base station of an interference cell 2, and a base station 2 and a base station 3 are base stations of interference cells. The base station 1 may obtain preset first power ratio restriction sets respectively corresponding to an interference cell 3 and an interference cell 4 from the base station 2 by using an interface 1. Alternatively, the base station 1 may obtain a preset first power ratio restriction set corresponding to an interference cell 5 from the base station 3 by using an interface 2. Alternatively, the base station 1 may directly obtain a preset first power ratio restriction set corresponding to the interference cell 2 from a memory of the base station 1. Therefore, when there are multiple interference cells, there are also multiple first power ratio restriction sets that are respectively corresponding to the interference cells.

In the prior art, a power ratio of the first original control signal sent by the base station of the interference cell to the first original pilot signal sent by the base station of the interference cell may be any value, and the terminal does not know the ratio that is of the power of the first original control signal to the power of the first original pilot signal and that is preset by the base station of the interference cell. If the first power ratio needs to be obtained, the terminal needs to obtain the first power ratio from any possible value by means of autonomous estimation. Therefore, complexity is high, and estimation accuracy can hardly be ensured. To reduce estimation complexity of the terminal, and to more accurately obtain the first power ratio, in the method provided in this embodiment of the present invention, a limited quantity of elements are preset in the first power ratio restriction set, so that the terminal can obtain the first power ratio according to the limited elements in the first power ratio restriction set by means of estimation, difficulty of an estimation process can be reduced, and estimation accuracy can be improved. For example, the second power ratio restriction set may be {-6 dB, -3 dB, 0 dB}.

102. The base station of the serving cell sends a preset second power ratio restriction set and the first power ratio restriction set to a terminal, where an element in the second power ratio restriction set is a preset value of a second power ratio, the second power ratio is a ratio of power of a second original control signal to power of a second original pilot signal in a second original PDCCH signal sent by the base station of the serving cell.

The base station of the serving cell may also limit the ratio of the power of the second original control signal to the power of the second original pilot signal in the element in the second power ratio restriction set according to the preset second power ratio restriction set, where the second original control signal and the second original pilot signal are in the second original PDCCH signal sent by the base station of the serving cell. Usually, there are also few elements in the second power ratio restriction set. This may be specifically set according to specific requirements. Therefore, complexity for estimating the second power ratio by the terminal according to the element in the second power ratio set can be reduced, and estimation accuracy can be improved. The second power ratio restriction set of the serving cell may be the same as or different from first power ratio restriction sets separately corresponding to different interference cells.

Actually, the terminal needs to perform estimation according to the second power ratio restriction set corresponding to the serving cell and first power ratio restriction sets corresponding to all interference cells, to obtain the first power ratio and the second power ratio. Therefore, after obtaining first power ratio restriction sets preset by base stations of all the interference cells, the base station of the serving cell may further send the first power ratio restriction sets and the second power ratio restriction set preset by the base station of the serving cell to the terminal, so that the terminal can obtain the second power ratio and the first power ratio by means of estimation according to the received first power ratio restriction sets and second power ratio restriction set.

Optionally, that the base station of the serving cell sends a preset second power ratio restriction set and the first power ratio restriction set to a terminal may include: The base station of the serving cell sends the preset second power ratio restriction set and the first power ratio restriction set to the terminal by using higher layer signaling.

The higher layer signaling is a signaling message sent by the base station of the serving cell to the terminal. An interval period of the higher layer signaling is relatively long, and the higher layer signaling is mainly used for sending some parameter information that does not need to be modified in a relatively long time, such as radio resource control (RRC) signaling or signaling of another protocol layer over a physical layer. For example, a format for sending the second power ratio restriction set and the first power ratio restriction set by using the higher layer signaling may be as follows:

```
{
Field 1: the second power ratio restriction set of the serving cell;
Field 2: an ID list of the interference cell;
Field 3: first power ratio restriction sets separately corresponding to interference cell IDs.
}
```

Because the first power ratio restriction set and the second power ratio restriction set may remain unchanged in a long time after being set, the first power ratio restriction set and the second power ratio restriction set may be sent by using the higher layer signaling with a relatively long interval period, so that network resource overheads can be reduced. In another case, the first power ratio restriction set and the second power ratio restriction set may be sent by using physical signaling. In this case, because an interval period for sending the physical signaling is relatively short, network resource overheads are relatively large, and unnecessary resource waste is caused.

103. The base station of the serving cell sends the second original PDCCH signal to the terminal, where a current value of the second power ratio of the second original PDCCH signal is an element selected from the second power ratio restriction set.

An original PDCCH signal sent by the base station of the serving cell to the terminal may be the second original PDCCH signal. The base station of the serving cell may send the second original PDCCH signal to the terminal by using multiple resource units.

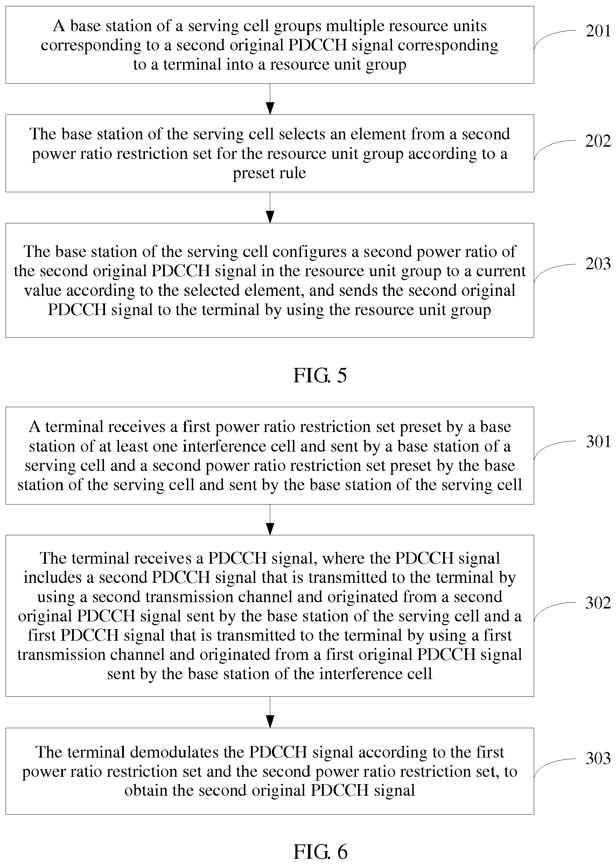

Optionally, referring to FIG. 5, that the base station of the serving cell sends the second original PDCCH signal to the terminal may include the following steps:

201. The base station of the serving cell groups multiple resource units corresponding to the second original PDCCH signal corresponding to the terminal into a resource unit group.

202. The base station of the serving cell selects an element from the second power ratio restriction set for the resource unit group according to a preset rule.

203. The base station of the serving cell configures the second power ratio of the second original PDCCH signal in the resource unit group to the current value according to the selected element, and sends the second original PDCCH signal to the terminal by using the resource unit group.

Specifically, the base station of the serving cell may identify an area corresponding to resource units of the second original PDCCH signal, group the resource units of the second original PDCCH signal corresponding to the terminal in the area into a same resource unit group, then select an appropriate element from the preset second power ratio restriction set for the resource unit group according to the preset rule, and send the second original PDCCH signal to the terminal corresponding to the resource unit group, so that the current ratio of the power of the second original control signal in the second original PDCCH signal to the power of the second original pilot signal in the second original PDCCH signal is the selected element. For example, the preset rule herein may be: If a signal of the current terminal is relatively weak, an element of a relatively large value may be selected from the second power ratio restriction set for the current terminal; if a signal of the current terminal is relatively strong, an element of a relatively small value may be selected from the second power ratio restriction set for the current terminal.

It should be noted that the second original PDCCH signal sent to the terminal by the base station of the serving cell includes the second original pilot signal and the second original control signal. Referring to foregoing descriptions of formula 1, among multiple resource units included in the resource unit group corresponding to the terminal, each resource unit is corresponding to the second original pilot signal in the second original PDCCH signal, or is corresponding to the second original control signal in the second original PDCCH signal. If a set of resource units in the resource unit group that are corresponding to the second original pilot signal is a first resource unit set, and a set of resource units corresponding to the second original control signal is a second resource unit set, the element selected from the second power ratio restriction set is a ratio of power that is of the second original control signal and corresponding to the second resource unit set to power that is of the second original pilot signal and corresponding to the first resource unit set.

A PDCCH signal in the resource unit received by the terminal includes not only a second PDCCH signal that is transmitted to the terminal by using a second transmission channel and originated from the second original PDCCH signal sent by the base station of the serving cell, but also a first PDCCH signal that is transmitted to the terminal by using a first transmission channel and originated from the first original PDCCH signal sent by the base station of the interference cell. Specifically, refer to descriptions of formula 1.

After receiving the first power ratio restriction set and the second power ratio restriction set sent by the base station of the serving cell, the terminal may obtain the first power ratio and the second power ratio by means of estimation according to the first power ratio restriction set and the second power ratio restriction set, to obtain a first channel matrix and a second channel matrix; and demodulate the PDCCH signal in the resource unit by using an algorithm such as MMSE, SLIC, or ML, to obtain the second original PDCCH signal, so that co-channel interference can be effectively reduced, and PDCCH signal demodulation performance can be improved.

As shown in formula 1, a PDCCH signal y in the resource unit includes a signal $\hat{h}_0 x_0$ that is transmitted to the terminal by using the second transmission channel and originated from the second original PDCCH signal sent by the

$$\sum_i \hat{h}_i x_i$$

base station of the serving cell, and further include the signal that is transmitted to the terminal by using the first transmission channel and originated from the first original PDCCH signal sent by the base station of the interference cell. It may be learned from formula 1 that after obtaining the second channel matrix $\hat{h}_0$ and the first channel matrix $\hat{h}_i$, the terminal may demodulate the PDCCH signal in the resource unit by using the algorithm such as MMSE, SLIC, and ML, to obtain the second original PDCCH signal.

In addition, it should be noted that step 102 and step 103 are not in a definite sequence. The base station of the serving cell may first send the second original PDCCH signal to the terminal, and then send the second power ratio restriction set and the first power ratio restriction set to the terminal. This is not limited in this embodiment of the present invention.

This embodiment of the present invention provides a signal sending method. A base station of a serving cell obtains a first power ratio restriction set preset by at least one interference cell, sends the first power ratio restriction set and a second power ratio restriction set preset by the base station of the serving cell to a terminal, and configures, according to a preset power ratio in the second power ratio restriction set, a ratio of power of a second original control signal to power of a second original pilot signal sent to the terminal, so that the terminal can obtain a first power ratio and a second power ratio by means of estimation according to the first power ratio restriction set and the second power ratio restriction set to obtain a first channel matrix and a second channel matrix, and demodulate a PDCCH signal in a resource unit by using an algorithm such as MMSE, SLIC, or ML that can effectively reduce co-channel interference, to obtain a second original PDCCH signal. Therefore, PDCCH signal demodulation performance can be improved, and a prior-art problem of a low user throughput caused by mismatch between poor PDCCH signal demodulation performance and PDSCH signal demodulation performance can be resolved.

Referring to FIG. 6, another embodiment of the present invention provides a signal demodulation method. The method may mainly include the following steps.

301. A terminal receives a first power ratio restriction set preset by a base station of at least one interference cell and sent by a base station of a serving cell and a second power ratio restriction set preset by the base station of the serving cell and sent by the base station of the serving cell, where an element in the first power ratio restriction set is a preset value of a first power ratio, the first power ratio is a ratio of power of a first original control signal to power of a first original pilot signal in a first original physical downlink control channel PDCCH signal sent by the base station of the interference cell by using a first transmission channel, an element in the second power ratio restriction set is a preset value of a second power ratio, the second power ratio is a ratio of power of a second original control signal to power of a second original pilot signal in a second original PDCCH signal sent by the base station of the serving cell by using a second transmission channel.

The terminal herein may be user equipment in the serving cell, such as a mobile phone, an iPad, or a personal digital assistant. The interference cell is usually a neighboring cell of the serving cell. There may be N interference cells, and N is a positive integer. For specific descriptions of the first power ratio restriction set and the second power ratio restriction set, refer to step 101 and step 102 in the foregoing embodiment.

In this step, the terminal may receive the first power ratio restriction set and the second power ratio restriction set from the base station of the serving cell, to obtain the first power ratio and the second power ratio by means of estimation according to elements in the first power ratio restriction set and the second power ratio restriction set, and further obtain a first channel matrix and a second channel matrix.

Optionally, that a terminal receives a first power ratio restriction set preset by a base station of at least one interference cell and sent by a base station of a serving cell and a second power ratio restriction set preset by the base station of the serving cell and sent by the base station of the serving cell may include: The terminal receives higher layer signaling sent by the base station of the serving cell, and the higher layer signaling carries the first power ratio restriction set and the second power ratio restriction set. Compared with sending the first power ratio restriction set and the second power ratio restriction set by using physical layer signaling with a relatively short interval period, network resource overheads can be reduced when the first power ratio restriction set and the second power ratio restriction set are sent by using the higher layer signaling with a relatively long interval period. For a process of sending the second power ratio restriction set and the first power ratio restriction set by using the higher layer signaling, refer to descriptions in step 102 in the foregoing embodiment, and details are not described herein.

302. The terminal receives a PDCCH signal, where the PDCCH signal includes a second PDCCH signal that is transmitted to the terminal by using the second transmission channel and originated from the second original PDCCH signal sent by the base station of the serving cell and a first PDCCH signal that is transmitted to the terminal by using the first transmission channel and originated from the first original PDCCH signal sent by the base station of the interference cell.

The PDCCH signal received by the terminal may include multiple resource units, a PDCCH signal in any resource unit may include the second PDCCH signal that is transmitted to the terminal by using the second transmission channel and originated from the second original PDCCH signal sent by the base station of the serving cell, the first PDCCH signal that is transmitted to the terminal by using the first transmission channel and originated from the first original PDCCH signal sent by the base station of the interference cell, and white noise. For specific composition of the PDCCH signal in any resource unit, refer to foregoing detailed descriptions of formula 1. A current value of the second power ratio of the second original PDCCH signal is an element selected from the second power ratio restriction set by the base station of the serving cell according to a preset rule. A current value of the first power ratio of the first original PDCCH signal is an element selected from the first power ratio restriction set by the base station of the interference cell according to a preset rule.

303. The terminal demodulates the PDCCH signal according to the first power ratio restriction set and the second power ratio restriction set, to obtain the second original PDCCH signal.

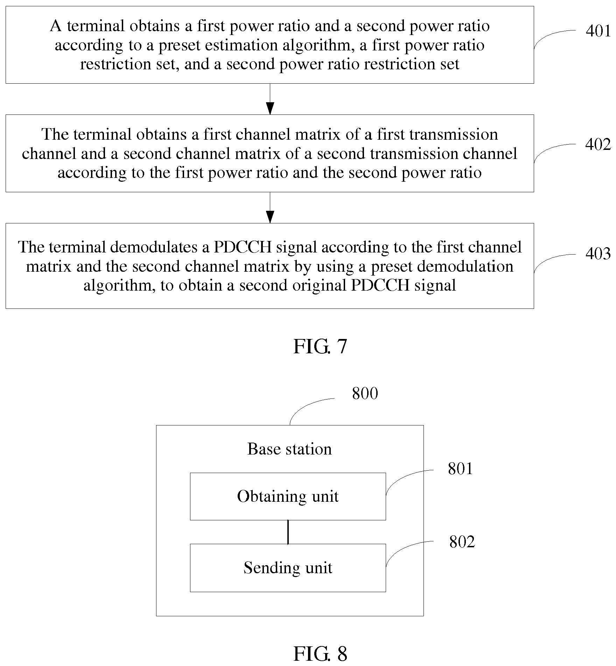

Specifically, after the first power ratio restriction set and the second power ratio restriction set are received, referring to FIG. 7, step 303 may specifically include the following steps.

401. The terminal obtains the first power ratio and the second power ratio according to a preset estimation algorithm, the first power ratio restriction set, and the second power ratio restriction set.

Because a location, in a resource block, of a resource unit of the second original pilot signal is corresponding to an ID of the serving cell, and because the second original pilot signal is a known signal that is agreed on by the base station of the serving cell and the terminal in advance, when the second original pilot signal and the location of the resource unit of the second original pilot signal are known, a second channel estimation matrix may be obtained based on a conventional channel estimation method. The second channel estimation matrix is a transmission feature of the second transmission channel corresponding to the resource unit, and second channels corresponding to different resource units have different second channel estimation matrices.

Likewise, when the first original pilot signal and a location of a resource unit of the first original pilot signal are known, a first channel estimation matrix may be obtained based on the conventional channel estimation method. The first channel estimation matrix herein is a transmission feature of the first transmission channel corresponding to the resource unit, and first transmission channels corresponding to different resource units have different first channel estimation matrices. It should be noted that, when there are N interference cells, there are also N first channel estimation matrices corresponding to the interference cells.

After obtaining the first channel estimation matrix and the second channel estimation matrix, the terminal may obtain the first power ratio and the second power ratio by means of estimation according to the preset estimation algorithm. This process is referred to as blind estimation processing. Optionally, the preset estimation algorithm used by the terminal may include a generalized maximum likelihood algorithm or a minimum energy algorithm.

For example, an expression of the generalized maximum likelihood algorithm may be represented by formula 3.

$$\{\rho_0, \rho_i\} = \arg \min_{\{\rho_0, \rho_i\}} \sum_j \left\{ \ln \det \left( \rho_0 \tilde{h}_0 \tilde{h}_0^{\mathrm{H}} + \sum_i \rho_i \tilde{h}_i \tilde{h}_i^{\mathrm{H}} + \sigma^2 I \right) + y^{\mathrm{H}} \left( \rho_0 \tilde{h}_0 \tilde{h}_0^{\mathrm{H}} + \sum_i \rho_i \tilde{h}_i \tilde{h}_i^{\mathrm{H}} + \sigma^2 I \right)^{-1} y \right\}$$

Formula 3

In the generalized maximum likelihood algorithm, all possible power ratio combinations $\{\rho_0, \rho_i\}$ are traversed to find a combination $\{\rho_0, \rho_i\}$ that minimizes a likelihood value

$$\sum_j \left\{ \ln \det \left( \rho_0 \tilde{h}_0 \tilde{h}_0^{\mathrm{H}} + \sum_i \rho_i \tilde{h}_i \tilde{h}_i^{\mathrm{H}} + \sigma^2 I \right) + y^{\mathrm{H}} \left( \rho_0 \tilde{h}_0 \tilde{h}_0^{\mathrm{H}} + \sum_i \rho_i \tilde{h}_i \tilde{h}_i^{\mathrm{H}} + \sigma^2 I \right)^{-1} y \right\}$$

. When all the possible power ratio combinations $\{\rho_0, \rho_i\}$ are being traversed, a value of $\rho_0$ is selected from the second power ratio restriction set, and a value of $\rho_i$ is selected from a first power ratio restriction set of an ith interference cell. When there are N interference cells, there are also N corresponding first power ratio restriction sets. A value range of j is a positive integer within an interval [1, M], and M is a quantity of resource units, other than resource units of the second pilot signal and the first pilot signal, in the resource units of the PDCCH signal. $\tilde{h}_0$ represents the second channel estimation matrix, and $\tilde{h}_0^{\mathrm{H}}$ represents a conjugate matrix of $\tilde{h}_0$. $\tilde{h}_i$ represents the first channel estimation matrix, and $\tilde{h}_i^{\mathrm{H}}$ represents a conjugate matrix of $\tilde{h}_i$.

$$\left( \rho_0 \tilde{h}_0 \tilde{h}_0^{\mathrm{H}} + \sum_i \rho_i \tilde{h}_i \tilde{h}_i^{\mathrm{H}} + \sigma^2 I \right)^{-1}$$ represents an inverse matrix of $$\left( \rho_0 \tilde{h}_0 \tilde{h}_0^{\mathrm{H}} + \sum_i \rho_i \tilde{h}_i \tilde{h}_i^{\mathrm{H}} + \sigma^2 I \right)$$ . $\sigma^2$ represents ground noise power, $I$ represents a unit matrix, and $y$ represents the PDCCH signal in the resource unit received by the terminal. $y^{\mathrm{H}}$ represents a conjugate matrix of $y$. $\rho_0$ that is in the combination $\{\rho_0,\rho_i\}$ and that minimizes the likelihood value represents the second power ratio, and $\rho_i$ represents a first power ratio corresponding to the $i$[th] interference cell.

For example, an expression of the minimum energy algorithm may be represented by formula 4.

$$\{\rho_0, \rho_i\} = \arg \min_{\{\rho_0,\rho_i\}_i} \left\| R_{yy} - \frac{1}{L} \sum \left( \rho_0 \tilde{h}_0 \tilde{h}_0^{\mathrm{H}} + \sum_i \rho_i \tilde{h}_i \tilde{h}_i^{\mathrm{H}} \right) - \sigma^2 I \right\|^2 \qquad \text{Formula 4}$$

$$R_{yy} = \frac{1}{L} \sum y y^*$$

In the minimum energy algorithm, all possible power ratio combinations $\{\rho_0,\rho_i\}$ are traversed to find a power ratio combination $\{\rho_0,\rho_i\}$ that minimizes energy of $$\frac{1}{L} \sum y y^* - \frac{1}{L} \sum \left( \rho_0 \tilde{h}_0 \tilde{h}_0^{\mathrm{H}} + \sum_i \rho_i \tilde{h}_i \tilde{h}_i^{\mathrm{H}} \right) - \sigma^2 I$$ , to obtain the second power ratio $\rho_0$ and the first power ratio $\rho_i$ in the power ratio combination. In formula 4, $$\left\| R_{yy} - \frac{1}{L} \sum \left( \rho_0 \tilde{h}_0 \tilde{h}_0^{\mathrm{H}} + \sum_i \rho_i \tilde{h}_i \tilde{h}_i^{\mathrm{H}} \right) - \sigma^2 I \right\|$$ represents a modulo operation performed on $$R_{yy} - \frac{1}{L} \sum \left( \rho_0 \tilde{h}_0 \tilde{h}_0^{\mathrm{H}} + \sum_i \rho_i \tilde{h}_i \tilde{h}_i^{\mathrm{H}} \right) - \sigma^2 I$$ . L represents a quantity of summation samples, and meanings of other parameter symbols are consistent with those in formula 3.

Certainly, the terminal may perform the blind estimation processing by using another preset estimation algorithm, to obtain the second power ratio corresponding to the serving cell and the first power ratio corresponding to the interference cell. This is not limited in this embodiment of the present invention.

402. The terminal obtains a first channel matrix of the first transmission channel and a second channel matrix of the second transmission channel according to the first power ratio and the second power ratio.

After obtaining the first power ratio, the terminal may multiply the first channel estimation matrix by the first power ratio, to obtain the first channel matrix, that is, a transmission feature of the first transmission channel for the first original pilot signal in the resource units. An expression of the first channel matrix may be represented by formula 5.

$$\hat{h}_i = \sqrt{\rho_i} \tilde{h}_i \qquad \text{Formula 5}$$

$\hat{h}_i$ represents the first channel matrix, $\tilde{h}_i$ represents the first channel estimation matrix, and $\rho_i$ represents the first power ratio. When there are N interference cells, there are also N first channel matrices corresponding to the interference cells.

Likewise, after obtaining the second power ratio, the terminal may multiply the second channel estimation matrix by the second power ratio, to obtain the second channel matrix, that is, a transmission feature of the second transmission channel for the second original control signal in the resource units. An expression of the second channel matrix may be represented by formula 6.

$$\hat{\boldsymbol{h}}_0 = \sqrt{\rho_0}\,\tilde{\boldsymbol{h}}_0 \qquad \text{Formula 6}$$

$\hat{\boldsymbol{h}}_0$ represents the second channel matrix, $\tilde{\boldsymbol{h}}_0$ represents the second channel estimation matrix, and $\rho_0$ represents the second power ratio.

403. The terminal demodulates the PDCCH signal according to the first channel matrix and the second channel matrix by using a preset demodulation algorithm, to obtain the second original PDCCH signal.

It may be learned from formula 1 that, after obtaining the first channel matrix and the second channel matrix, the terminal may demodulate the received PDCCH signal to obtain the second original PDCCH signal. Specifically, the terminal may demodulate the received PDCCH signal in the resource units by using a demodulation algorithm that can effectively reduce co-channel interference, to improve PDCCH signal demodulation performance.

Optionally, the preset demodulation algorithm may include an MMSE algorithm, an SLIC algorithm, and an ML algorithm. For example, for an expression of the MMSE algorithm, refer to formula 2. The MMSE, SLIC, and ML algorithms belong to the prior art, and are not described in detail herein. Certainly, after obtaining the first channel matrix and the second channel matrix, the terminal may use another demodulation algorithm that can effectively reduce the co-channel interference, and this is not limited in this embodiment of the present invention.

In addition, the second original pilot signal in the second original PDCCH signal is a known signal that is agreed on in advance, and does not need to be obtained by means of demodulation. The second original control signal in the second original PDCCH signal may be specifically obtained by using the foregoing demodulation method.

Compared with demodulating PDCCH by using an algorithm such as MRC or IRC in the prior art, because the MMSE algorithm, the SLIC algorithm, the ML algorithm, or the like can effectively reduce co-channel interference, PDCCH demodulation performance can be improved. Therefore, the PDCCH demodulation performance matches PDSCH demodulation performance, so that a user throughput can be improved.

This embodiment of the present invention provides a signal demodulation method. Because a terminal receives a first power ratio restriction set of a serving cell and a second power ratio restriction set of an interference cell, the terminal may obtain a first power ratio and a second power ratio by means of estimation according to the first power ratio restriction set and the second power ratio restriction set, so that a first channel matrix and a second channel matrix can be obtained, and a PDCCH signal can be demodulated according to the first channel matrix and the second channel matrix by using a demodulation algorithm such as MMSE, SLIC, or ML that can effectively reduce co-channel interference, to obtain a second original PDCCH signal. Therefore, PDCCH signal demodulation performance can be improved, and a prior-art problem of a low user throughput caused by mismatch between poor PDCCH signal demodulation performance and PDSCH signal demodulation performance can be resolved.

Another embodiment of the present invention provides a base station 800. Referring to FIG. 8, the base station 800 may include an obtaining unit 801 and a sending unit 802.

The obtaining unit 801 may be configured to obtain a first power ratio restriction set preset by a base station of at least one interference cell. An element in the first power ratio restriction set is a preset value of a first power ratio, the first power ratio is a ratio of power of a first original control signal to power of a first original pilot signal in a first original physical downlink control channel PDCCH signal sent by the base station of the interference cell by using a first transmission channel.

The sending unit 802 may be configured to send a preset second power ratio restriction set and the first power ratio restriction set to a terminal. An element in the second power ratio restriction set is a preset value of a second power ratio, the second power ratio is a ratio of power of a second original control signal to power of a second original pilot signal in a second original PDCCH signal sent by a base station 800 of a serving cell.

The sending unit 802 may be further configured to send the second original PDCCH signal to the terminal. A current value of the second power ratio of the second original PDCCH signal is an element selected from the second power ratio restriction set.

The base station 800 herein is the base station of the serving cell.

Optionally, the sending unit 802 may be specifically configured to:
send the preset second power ratio restriction set and the first power ratio restriction set to the terminal by using higher layer signaling.

Optionally, the sending unit 802 may further be specifically configured to:

group multiple resource units corresponding to the second original PDCCH signal corresponding to the terminal into a resource unit group;

select an element from the second power ratio restriction set for the resource unit group according to a preset rule; and configure the second power ratio of the second original PDCCH signal in the resource unit group to the current value according to the selected element, and send the second original PDCCH signal to the terminal by using the resource unit group.

This embodiment of the present invention provides a base station 800. A first power ratio restriction set preset by at least one interference cell is obtained, the first power ratio restriction set and a second power ratio restriction set preset by a base station 800 of a serving cell are sent to a terminal, and a ratio of power of a second original control signal sent to the terminal to power of a second original pilot signal sent to the terminal is configured according to a preset power ratio in the second power ratio restriction set, so that the terminal can obtain a first power ratio and a second power ratio by means of estimation according to the first power ratio restriction set and the second power ratio restriction set to obtain a first channel matrix and a second channel matrix, and demodulate a PDCCH signal in a resource unit by using an algorithm such as MMSE, SLIC, or ML that can effectively reduce co-channel interference, to obtain a second original PDCCH signal. Therefore, PDCCH signal demodulation performance can be improved, and a prior-art problem of a low user throughput caused by mismatch between poor PDCCH signal demodulation performance and PDSCH signal demodulation performance can be resolved.

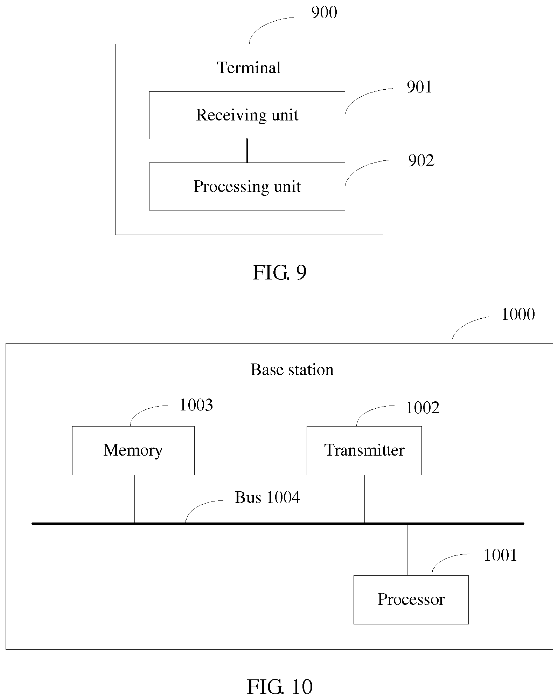

Another embodiment of the present invention provides a terminal 900. Referring to FIG. 9, the terminal 900 may include a receiving unit 901 and a processing unit 902.

The receiving unit 901 may be configured to receive a first power ratio restriction set preset by a base station of at least one interference cell and sent by a base station of a serving cell and a second power ratio restriction set preset by the base station of the serving cell and sent by the base station of the serving cell. An element in the first power ratio restriction set is a preset value of a first power ratio, the first power ratio is a ratio of power of a first original control signal to power of a first original pilot signal in a first original physical downlink control channel PDCCH signal sent by the base station of the interference cell by using a first transmission channel, an element in the second power ratio restriction set is a preset value of a second power ratio, the second power ratio is a ratio of power of a second original control signal to power of a second original pilot signal in a second original PDCCH signal sent by the base station of the serving cell by using a second transmission channel.

The receiving unit 901 may be further configured to receive a PDCCH signal. The PDCCH signal includes a second PDCCH signal that is transmitted to the terminal by using the second transmission channel and originated from the second original PDCCH signal sent by the base station of the serving cell and a first PDCCH signal that is transmitted to the terminal by using the first transmission channel and originated from the first original PDCCH signal sent by the base station of the interference cell.

The processing unit 902 may be configured to demodulate the PDCCH signal according to the first power ratio restriction set and the second power ratio restriction set, to obtain the second original PDCCH signal.

The terminal 900 herein may be user equipment in the serving cell, such as a mobile phone, an iPad, or a personal digital assistant.

Optionally, the receiving unit 901 may be specifically configured to:

receive higher layer signaling sent by the base station of the serving cell, where the higher layer signaling carries the first power ratio restriction set and the second power ratio restriction set.

Optionally, the processing unit 902 may be specifically configured to:

obtain the first power ratio and the second power ratio according to a preset estimation algorithm, the first power ratio restriction set, and the second power ratio restriction set;
obtain a first channel matrix of the first transmission channel and a second channel matrix of the second transmission channel according to the first power ratio and the second power ratio; and
demodulate the PDCCH signal according to the first channel matrix and the second channel matrix by using a preset demodulation algorithm, to obtain the second original PDCCH signal.

Optionally, the preset estimation algorithm may include a generalized maximum likelihood algorithm or a minimum energy algorithm.

This embodiment of the present invention provides a terminal 900. Because the terminal 900 receives a first power ratio restriction set of a serving cell and a second power ratio restriction set of an interference cell, the terminal may obtain a first power ratio and a second power ratio by means of estimation according to the first power ratio restriction set and the second power ratio restriction set, so that a first channel matrix and a second channel matrix can be obtained, and a PDCCH signal can be demodulated according to the first channel matrix and the second channel matrix by using a demodulation algorithm such as MMSE, SLIC, or ML that can effectively reduce co-channel interference, to obtain a second original PDCCH signal. Therefore, PDCCH signal demodulation performance can be improved, and a prior-art problem of a low user throughput caused by mismatch between poor PDCCH signal demodulation performance and PDSCH signal demodulation performance can be resolved.

Another embodiment of the present invention provides a base station 1000. Referring to FIG. 10, the base station 1000 may include a processor 1001, a transmitter 1002, a memory 1003, and a bus 1004. The memory 1003 is configured to store an instruction and data. The bus 1004 is configured to connect the processor 1001, the transmitter 1002, and the memory 1003. The processor 1001 executes the instruction, and may be configured to obtain a first power ratio restriction set preset by a base station of at least one interference cell. An element in the first power ratio restriction set is a preset value of a first power ratio, the first power ratio is a ratio of power of a first original control signal to power of a first original pilot signal in a first of the interference cell by using a first transmission channel.

The transmitter 1002 executes the instruction and may be configured to send a preset second power ratio restriction set and the first power ratio restriction set to a terminal. An element in the second power ratio restriction set is a preset value of a second power ratio, the second power ratio is a ratio of power of a second original control signal to power of a second original pilot signal in a second original PDCCH signal sent by a base station 1000 of a serving cell.

The transmitter 1002 executes the instruction and may be further configured to send the second original PDCCH signal to the terminal. A current value of the second power ratio of the second original PDCCH signal is an element in the second power ratio restriction set.

The base station 1000 herein may be the base station of the serving cell.

Optionally, that the transmitter 1002 executes the instruction and is configured to send a preset second power ratio restriction set and the first power ratio restriction set to a terminal may include:

sending the preset second power ratio restriction set and the first power ratio restriction set to the terminal by using higher layer signaling.

Optionally, that the transmitter 1002 executes the instruction and is configured to send the second original PDCCH signal to the terminal may include:

grouping multiple resource units corresponding to the second original PDCCH signal corresponding to the terminal into a resource unit group;
selecting an element from the second power ratio restriction set for the resource unit group according to a preset rule; and
configuring the second power ratio of the second original PDCCH signal in the resource unit group to the current value according to the selected element, and sending the second original PDCCH signal to the terminal by using the resource unit group.

This embodiment of the present invention provides a base station 1000. A first power ratio restriction set preset by at least one interference cell is obtained, the first power ratio restriction set and a second power ratio restriction set preset by a base station 1000 of a serving cell are sent to a terminal, and a ratio of power of a second original control signal sent to the terminal to power of a second original pilot signal sent to the terminal is configured according to a preset power ratio in the second power ratio restriction set, so that the terminal can obtain a first power ratio and a second power ratio by means of estimation according to the first power ratio restriction set and the second power ratio restriction set to obtain a first channel matrix and a second channel matrix, and demodulate a PDCCH signal in a resource unit by using an algorithm such as MMSE, SLIC, or ML that can effectively reduce co-channel interference, to obtain a second original PDCCH signal. Therefore, PDCCH signal demodulation performance can be improved, and a prior-art problem of a low user throughput caused by mismatch between poor PDCCH signal demodulation performance and PDSCH signal demodulation performance can be resolved.

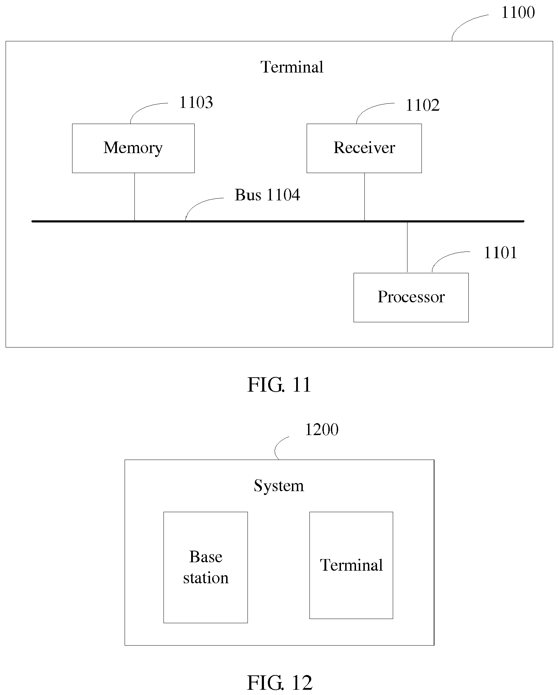

Another embodiment of the present invention provides a terminal 1100. Referring to FIG. 11, the terminal 1100 may include a processor 1101, a transmitter 1102, a memory 1103, and a bus 1104. The memory 1103 is configured to store an instruction and data. The bus 1104 is configured to connect the processor 1101, the transmitter 1102, and the memory 1103. The transmitter 1102 executes the instruction and is configured to receive a first power ratio restriction set preset by a base station of at least one interference cell and sent by a base station of a serving cell and a second power ratio restriction set preset by the base station of the serving cell and sent by the base station of the serving cell. An element in the first power ratio restriction set is a preset value of a first power ratio, the first power ratio is a ratio of power of a first original control signal to power of a first original pilot signal in a first original physical downlink control channel PDCCH signal sent by the base station of the interference cell by using a first transmission channel, an element in the second power ratio restriction set is a preset value of a second power ratio, the second power ratio is a ratio of power of a second original control signal to power of a second original pilot signal in a second original PDCCH signal sent by the base station of the serving cell by using a second transmission channel.

The transmitter 1102 executes the instruction and may be further configured to receive a PDCCH signal. The PDCCH signal includes a second PDCCH signal that is transmitted to the terminal by using the second transmission channel and originated from the second original PDCCH signal sent by the base station of the serving cell and a first PDCCH signal that is transmitted to the terminal by using the first transmission channel and originated from the first original PDCCH signal sent by the base station of the interference cell.

The processor 1101 executes the instruction and may be configured to demodulate the PDCCH signal according to the first power ratio restriction set and the second power ratio restriction set, to obtain the second original PDCCH signal.

The terminal 1100 herein may be user equipment in the serving cell, such as a mobile phone, an iPad, or a personal digital assistant.

Optionally, that the transmitter 1102 executes the instruction and is configured to receive a first power ratio restriction set preset by a base station of at least one interference cell and sent by a base station of a serving cell and a second power ratio restriction set preset by the base station of the serving cell and sent by the base station of the serving cell may include:

receiving higher layer signaling sent by the base station of the serving cell, where the higher layer signaling carries the first power ratio restriction set and the second power ratio restriction set.

Optionally, that the processor 1101 executes the instruction and is configured to demodulate the received PDCCH signal according to the first power ratio restriction set and the second power ratio restriction set, to obtain the second original PDCCH signal may include:

obtaining the first power ratio and the second power ratio according to a preset estimation algorithm, the first power ratio restriction set, and the second power ratio restriction set;

obtaining a first channel matrix of the first transmission channel and a second channel matrix of the second transmission channel according to the first power ratio and the second power ratio; and

demodulating the PDCCH signal according to the first channel matrix and the second channel matrix by using a preset demodulation algorithm, to obtain the second original PDCCH signal.

Optionally, the preset estimation algorithm may include a generalized maximum likelihood algorithm or a minimum energy algorithm.

This embodiment of the present invention provides a terminal 1100. Because the terminal 1100 receives a first power ratio restriction set of a serving cell and a second power ratio restriction set of an interference cell, the terminal may obtain a first power ratio and a second power ratio by means of estimation according to the first power ratio restriction set and the second power ratio restriction set, so that a first channel matrix and a second channel matrix can be obtained, and a PDCCH signal can be demodulated according to the first channel matrix and the second channel matrix by using a demodulation algorithm such as MMSE, SLIC, or ML that can effectively reduce co-channel interference, to obtain a second original PDCCH signal. Therefore, PDCCH signal demodulation performance can be improved, and a prior-art problem of a low user throughput caused by mismatch between poor PDCCH signal demodulation performance and PDSCH signal demodulation performance can be resolved.

Referring to FIG. 12, an embodiment of the present invention further provides a system 1200 that includes a base station with a structure shown in FIG. 8 or FIG. 10 and a terminal with a structure shown in FIG. 9 or FIG. 11.

In the several embodiments provided in this application, it should be understood that the disclosed device, method, and system may be implemented in other manners. For example, the described apparatus embodiment is merely for an example. For example, the unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms. The units described as separate parts may or may not be physically separate, and parts displayed as units may or may not be physical units, may be located in one position, or may be distributed on a plurality of network units. Some or all of the units may be selected according to actual needs to achieve the objectives of the solutions of the embodiments. In addition, functional units in the embodiments of the present invention may be integrated into one processing unit, or each of the units may exist alone physically, or two or more units are integrated into one unit. The integrated unit may be implemented in a form of hardware, or may be implemented in a form of hardware in addition to a software functional unit.

When the foregoing integrated unit is implemented in a form of a software functional unit, the integrated unit may be stored in a computer-readable storage medium. The software functional unit is stored in a storage medium and includes several instructions for instructing a computer device (which may be a personal computer, a server, or a network device) to perform some of the steps of the methods described in the embodiments of the present invention. The foregoing storage medium includes: any medium that can store program code, such as a USB flash drive, a removable hard disk, a read-only memory (ROM), a random access memory (RAM), a magnetic disk, or an optical disc.

For some specific functions of the apparatus, the system, or the device, refer to descriptions in the foregoing method embodiments.

Finally, it should be noted that the foregoing embodiments are merely intended for describing the technical solutions of the present invention but not for limiting the present invention. Although the present invention is described in detail with reference to the foregoing embodiments, persons of ordinary skill in the art should understand that they may still make modifications to the technical solutions described in the foregoing embodiments or make equivalent replacements to some technical features thereof, without departing from the scope of the technical solutions of the embodiments of the present invention.

**Claims**

1. A signal sending method, wherein the method comprises:

   obtaining (101), by a base station of a serving cell, a first power ratio restriction set preset by a base station of at least one interference cell, wherein an element in the first power ratio restriction set is a preset value of a first power ratio, the first power ratio is a ratio of power of a first original control signal to power of a first original pilot signal in a first original physical downlink control channel PDCCH signal sent by the base station of the interference cell by using a first transmission channel;
   sending (102), by the base station of the serving cell, a second power ratio restriction set preset by the base station of the serving cell and the first power ratio restriction set to a terminal, wherein an element in the second power ratio restriction set is a preset value of a second power ratio, the second power ratio is a ratio of power of a second original control signal to power of a second original pilot signal in a second original PDCCH signal sent by the base station of the serving cell; and
   sending (103, 201, 202, 203), by the base station of the serving cell, the second original PDCCH signal to the terminal, wherein a current value of the second power ratio of the second original PDCCH signal is an element selected from the second power ratio restriction set.

2. The method according to claim 1, wherein the sending (102), by the base station of the serving cell, the second power ratio restriction set preset by the base station of the serving cell and the first power ratio restriction set to the terminal comprises:
   sending, by the base station of the serving cell, the second power ratio restriction set and the first power ratio restriction set to the terminal by using higher layer signaling.

3. The method according to claim 1 or 2, wherein the sending (103, 201, 202, 203), by the base station of the serving cell, the second original PDCCH signal to the terminal comprises:

   grouping (201), by the base station of the serving cell, multiple resource units corresponding to the second original PDCCH signal corresponding to the terminal into a resource unit group;
   selecting (202), by the base station of the serving cell, an element from the second power ratio restriction set for the resource unit group according to a preset rule; and
   configuring (203), by the base station of the serving cell, the second power ratio of the second original PDCCH signal in the resource unit group to the current value according to the selected element, and sending the second original PDCCH signal to the terminal by using the resource unit group.

4. A signal demodulation method, wherein the method comprises:

   receiving (301), by a terminal, a first power ratio restriction set preset by a base station of at least one interference cell and sent by a base station of a serving cell and a second power ratio restriction set preset by the base station of the serving cell and sent by the base station of the serving cell, wherein an element in the first power ratio restriction set is a preset value of a first power ratio, the first power ratio is a ratio of power of a first original control signal to power of a first original pilot signal in a first original physical downlink control channel PDCCH signal sent by the base station of the interference cell by using a first transmission channel, an element in the second power ratio restriction set is a preset value of a second power ratio, the second power ratio is a ratio of power of a second original control signal to power of a second original pilot signal in a second original PDCCH signal sent by the base station of the serving cell by using a second transmission channel;
   receiving (302), by the terminal, a PDCCH signal, wherein the PDCCH signal comprises a second PDCCH signal that is transmitted to the terminal by using the second transmission channel and originated from the second original PDCCH signal sent by the base station of the serving cell and a first PDCCH signal that is transmitted to the terminal by using the first transmission channel and originated from the first original PDCCH signal sent by the base station of the interference cell; and

demodulating (303), by the terminal, the PDCCH signal according to the first power ratio restriction set and the second power ratio restriction set, to obtain the second original PDCCH signal.

5. The method according to claim 4, wherein the receiving (301), by a terminal, a first power ratio restriction set preset by a base station of at least one interference cell and sent by a base station of a serving cell and a second power ratio restriction set preset by the base station of the serving cell and sent by the base station of the serving cell comprises:

receiving, by the terminal, higher layer signaling sent by the base station of the serving cell, wherein the higher layer signaling carries the first power ratio restriction set and the second power ratio restriction set.

6. The method according to claim 4 or 5, wherein the demodulating (303), by the terminal, the PDCCH signal according to the first power ratio restriction set and the second power ratio restriction set, to obtain the second original PDCCH signal comprises:

obtaining, by the terminal, the first power ratio and the second power ratio according to a preset estimation algorithm, the first power ratio restriction set, and the second power ratio restriction set;
obtaining, by the terminal, a first channel matrix of the first transmission channel and a second channel matrix of the second transmission channel according to the first power ratio and the second power ratio; and
demodulating, by the terminal, the PDCCH signal according to the first channel matrix and the second channel matrix by using a preset demodulation algorithm, to obtain the second original PDCCH signal.

7. The method according to claim 6, wherein the preset estimation algorithm comprises a generalized maximum likelihood algorithm or a minimum energy algorithm.

8. Abase station (800), comprising:

an obtaining unit (801), configured to obtain a first power ratio restriction set preset by a base station of at least one interference cell, wherein an element in the first power ratio restriction set is a preset value of a first power ratio, the first power ratio is a ratio of power of a first original control signal to power of a first original pilot signal in a first original physical downlink control channel PDCCH signal sent by the base station of the interference cell by using a first transmission channel; and
a sending unit (802), configured to send a second power ratio restriction set preset by the base station of the serving cell and the first power ratio restriction set to a terminal, wherein an element in the second power ratio restriction set is a preset value of a second power ratio, the second power ratio is a ratio of power of a second original control signal to power of a second original pilot signal in a second original PDCCH signal sent by the base station of the serving cell; wherein
the sending unit (802) is further configured to send the second original PDCCH signal to the terminal, wherein a current value of the second power ratio of the second original PDCCH signal is an element selected from the second power ratio restriction set.

9. The base station according to claim 8, wherein the sending unit (802) is specifically configured to:
send the second power ratio restriction set and the first power ratio restriction set to the terminal by using higher layer signaling.

10. The base station according to claim 8 or 9, wherein the sending unit (802) is specifically configured to:

group multiple resource units corresponding to the second original PDCCH signal corresponding to the terminal into a resource unit group;
select an element from the second power ratio restriction set for the resource unit group according to a preset rule; and
configure the second power ratio of the second original PDCCH signal in the resource unit group to the current value according to the selected element, and send the second original PDCCH signal to the terminal by using the resource unit group.

11. A terminal (900), comprising:

a receiving unit (901), configured to receive a first power ratio restriction set preset by a base station of at least one interference cell and sent by a base station of a serving cell and a second power ratio restriction set preset by the base station of the serving cell and sent by the base station of the serving cell, wherein an element in the first power ratio restriction set is a preset value of a first power ratio, the first power ratio is a ratio of power of a first original control signal to power of a first original pilot signal in a first original physical downlink control channel PDCCH signal sent by the base station of the interference cell by using a first transmission channel, an element in the second power ratio restriction set is a preset value of a second power ratio, the second power ratio is a ratio of power of a second original control signal to power of a second original pilot signal in a second original PDCCH signal sent by the base station of the serving cell by using a second transmission channel, wherein

the receiving unit (901) is further configured to receive a PDCCH signal, wherein the PDCCH signal comprises a second PDCCH signal that is transmitted to the terminal by using the second transmission channel and originated from the second original PDCCH signal sent by the base station of the serving cell and a first PDCCH signal that is transmitted to the terminal by using the first transmission channel and originated from the first original PDCCH signal sent by the base station of the interference cell; and

a processing unit (902), configured to demodulate the PDCCH signal according to the first power ratio restriction set and the second power ratio restriction set, to obtain the second original PDCCH signal.

12. The terminal according to claim 11, wherein the receiving unit (901) is specifically configured to:

receive higher layer signaling sent by the base station of the serving cell, wherein the higher layer signaling carries the first power ratio restriction set and the second power ratio restriction set.

13. The terminal according to claim 11 or 12, wherein the processing unit (902) is specifically configured to:

obtain the first power ratio and the second power ratio according to a preset estimation algorithm, the first power ratio restriction set, and the second power ratio restriction set;

obtain a first channel matrix of the first transmission channel and a second channel matrix of the second transmission channel according to the first power ratio and the second power ratio; and

demodulate the PDCCH signal according to the first channel matrix and the second channel matrix by using a preset demodulation algorithm, to obtain the second original PDCCH signal.

14. The terminal according to claim 13, wherein the preset estimation algorithm comprises a generalized maximum likelihood algorithm or a minimum energy algorithm.

15. A system, comprising the base station according to any one of claims 8 to 10 and the terminal according to any one of claims 11 to 14.

**Patentansprüche**

1. Verfahren zum Senden von Signalen, wobei das Verfahren Folgendes umfasst:

durch eine Basisstation einer Versorgungszelle erfolgendes Beziehen (101) eines durch eine Basisstation mindestens einer Störzelle vorab eingestellten ersten Leistungsverhältnis-Begrenzungssatzes, wobei es sich bei einem Element im ersten Leistungsverhältnis-Begrenzungssatz um einen vorab eingestellten Wert eines ersten Leistungsverhältnisses handelt, wobei es sich beim ersten Leistungsverhältnis um ein Verhältnis einer Leistung eines ersten Ursprungs-Steuersignals zu einer Leistung eines ersten Ursprungs-Pilotsignals in einem durch die Basisstation der Störzelle unter Verwendung eines ersten Übertragungskanals gesendeten ersten Physical-Downlink-Control-Channel-, PCCCH-, Ursprungssignal handelt,

durch die Basisstation der Versorgungszelle erfolgendes Senden (102) eines durch die Basisstation der Versorgungszelle vorab eingestellten zweiten Leistungsverhältnis-Begrenzungssatzes und des ersten Leistungsverhältnis-Begrenzungssatzes an ein Endgerät, wobei es sich bei einem Element im zweiten Leistungsverhältnis-Begrenzungssatz um einen vorab eingestellten Wert eines zweiten Leistungsverhältnisses handelt, wobei es sich beim zweiten Leistungsverhältnis um ein Verhältnis einer Leistung eines zweiten Ursprungs-Steuersignals zu einer Leistung eines zweiten Ursprungs-Pilotsignals in einem durch die Basisstation der Versorgungszelle gesendeten zweiten PDCCH-Ursprungssignal handelt, und

durch die Basisstation der Versorgungszelle erfolgendes Senden (103, 201, 202, 203) des zweiten PDCCH-Ursprungssignals an das Endgerät, wobei es sich bei einem aktuellen Wert des zweiten Leistungsverhältnisses des zweiten PDCCH-Ursprungssignals um ein aus dem zweiten Leistungsverhältnis-Begrenzungssatz ausgewähltes Element handelt.

2. Verfahren nach Anspruch 1, wobei das durch die Basisstation der Versorgungszelle erfolgende Senden (102) des durch die Basisstation der Versorgungszelle vorab eingestellten zweiten Leistungsverhältnis-Begrenzungssatzes und des ersten Leistungsverhältnis-Begrenzungssatzes an das Endgerät Folgendes umfasst:
durch die Basisstation der Versorgungszelle erfolgendes Senden des zweiten Leistungsverhältnis-Begrenzungssatzes und des ersten Leistungsverhältnis-Begrenzungssatzes an das Endgerät unter Verwendung von Signalisierung höherer Schichten.

3. Verfahren nach Anspruch 1 oder 2, wobei das durch die Basisstation der Versorgungszelle erfolgende Senden (103, 201, 202, 203) des zweiten PDCCH-Ursprungssignals an das Endgerät Folgendes umfasst:

durch die Basisstation der Versorgungszelle erfolgendes Gruppieren (201) mehrerer dem zweiten PDCCH-Ursprungssignal entsprechender Ressourceneinheiten entsprechend dem Endgerät zu einer Ressourceneinheitengruppe,
durch die Basisstation der Versorgungszelle erfolgendes Auswählen (202) eines Elements aus dem zweiten Leistungsverhältnis-Begrenzungssatz für die Ressourceneinheitengruppe gemäß einer vorab eingestellten Regel und
durch die Basisstation der Versorgungszelle erfolgendes Konfigurieren (203) des zweiten Leistungsverhältnisses des zweiten PDCCH-Ursprungssignals in der Ressourceneinheitengruppe auf den aktuellen Wert gemäß dem ausgewählten Element und Senden des zweiten PDCCH-Ursprungssignals an das Endgerät unter Verwendung der Ressourceneinheitengruppe.

4. Signaldemodulationsverfahren, wobei das Verfahren Folgendes umfasst:

durch ein Endgerät erfolgendes Empfangen (301) eines durch eine Basisstation mindestens einer Störzelle vorab eingestellten und durch eine Basisstation einer Versorgungszelle gesendeten ersten Leistungsverhältnis-Begrenzungssatzes und eines durch die Basisstation der Versorgungszelle vorab eingestellten und durch die Basisstation der Versorgungszelle gesendeten zweiten Leistungsverhältnis-Begrenzungssatzes, wobei es sich bei einem Element im ersten Leistungsverhältnis-Begrenzungssatz um einen vorab eingestellten Wert eines ersten Leistungsverhältnisses handelt, wobei es sich beim ersten Leistungsverhältnis um ein Verhältnis einer Leistung eines ersten Ursprungs-Steuersignals zu einer Leistung eines ersten Ursprungs-Pilotsignals in einem durch die Basisstation der Störzelle unter Verwendung eines ersten Übertragungskanals gesendeten ersten Physical-Downlink-Control-Channel-, PDCCH-, Ursprungs signal handelt, wobei es sich bei einem Element im zweiten Leistungsverhältnis-Begrenzungssatz um einen vorab eingestellten Wert eines zweiten Leistungsverhältnisses handelt, wobei es sich beim zweiten Leistungsverhältnis um ein Verhältnis einer Leistung eines zweiten Ursprungs-Steuersignals zu einer Leistung eines zweiten Ursprungs-Pilotsignals in einem durch die Basisstation der Versorgungszelle unter Verwendung eines zweiten Übertragungskanals gesendeten zweiten PDCCH-Ursprungssignal handelt,
durch das Endgerät erfolgendes Empfangen (302) eines PDCCH-Signals, wobei das PDCCH-Signal ein zweites PDCCH-Signal, das an das Endgerät unter Verwendung des zweiten Übertragungskanals übertragen wird und dem durch die Basisstation der Versorgungszelle gesendeten zweiten PDCCH-Ursprungssignal entstammt, und ein erstes PDCCH-Signal umfasst, das an das Endgerät unter Verwendung des ersten Übertragungskanals übertragen wird und dem durch die Basisstation der Störzelle gesendeten ersten PDCCH-Ursprungssignal entstammt, und
durch das Endgerät erfolgendes Demodulieren (303) des PDCCH-Signals entsprechend dem ersten Leistungsverhältnis-Begrenzungssatz und dem zweiten Leistungsverhältnis-Begrenzungssatz, um das zweite PDCCH-Ursprungssignal zu beziehen.

5. Verfahren nach Anspruch 4, wobei das durch das Endgerät erfolgende Empfangen (301) eines durch eine Basisstation mindestens einer Störzelle vorab eingestellten und durch eine Basisstation einer Versorgungszelle gesendeten ersten Leistungsverhältnis-Begrenzungssatzes und eines durch die Basisstation der Versorgungszelle vorab eingestellten und durch die Basisstation der Versorgungszelle gesendeten zweiten Leistungsverhältnis-Begrenzungssatzes Folgendes umfasst:
durch das Endgerät erfolgendes Empfangen einer durch die Basisstation der Versorgungszelle gesendeten Signalisierung höherer Schichten, wobei die Signalisierung höherer Schichten den ersten Leistungsverhältnis-Begrenzungssatz und den zweiten Leistungsverhältnis-Begrenzungssatz enthält.

**6.** Verfahren nach Anspruch 4 oder 5, wobei das durch das Endgerät erfolgende Demodulieren (303) des PDCCH-Signals gemäß dem ersten Leistungsverhältnis-Begrenzungssatz und dem zweiten Leistungsverhältnis-Begrenzungssatz zum Beziehen des zweiten PDCCH-Ursprungssignals Folgendes umfasst:

durch das Endgerät erfolgendes Beziehen des ersten Leistungsverhältnisses und des zweiten Leistungsverhältnisses gemäß einem vorab eingestellten Schätzalgorithmus, dem ersten Leistungsverhältnis-Begrenzungssatz und dem zweiten Leistungsverhältnis-Begrenzungssatz,
durch das Endgerät erfolgendes Beziehen einer ersten Kanalmatrix des ersten Übertragungskanals und einer zweiten Kanalmatrix des zweiten Übertragungskanals gemäß dem ersten Leistungsverhältnis und dem zweiten Leistungsverhältnis und durch das Endgerät erfolgendes Demodulieren des PDCCH-Signals gemäß der ersten Kanalmatrix und der zweiten Kanalmatrix unter Verwendung eines vorab eingestellten Demodulationsalgorithmus, um das zweite PDCCH-Ursprungssignal zu beziehen.

**7.** Verfahren nach Anspruch 6, wobei der vorab eingestellte Schätzalgorithmus einen generalisierten Maximum-Likelihood-Algorithmus oder einen Minimum-Energy-Algorithmus umfasst.

**8.** Basisstation (800), umfassend:

eine Bezugseinheit (801), die dafür konfiguriert ist, einen durch eine Basisstation mindestens einer Störzelle vorab eingestellten ersten Leistungsverhältnis-Begrenzungssatz zu beziehen, wobei es sich bei einem Element im ersten Leistungsverhältnis-Begrenzungssatz um einen vorab eingestellten Wert eines ersten Leistungsverhältnisses handelt, wobei es sich beim ersten Leistungsverhältnis um ein Verhältnis einer Leistung eines ersten Ursprungs-Steuersignals zu einer Leistung eines ersten Ursprungs-Pilotsignals in einem durch die Basisstation der Störzelle unter Verwendung eines ersten Übertragungskanals gesendeten ersten Physical-Downlink-Control-Channel-, PCCCH-, Ursprungssignal handelt,
eine Sendeeinheit (802), die dafür konfiguriert ist, einen durch die Basisstation der Versorgungszelle vorab eingestellten zweiten Leistungsverhältnis-Begrenzungssatz und den ersten Leistungsverhältnis-Begrenzungssatz an ein Endgerät zu senden, wobei es sich bei einem Element im zweiten Leistungsverhältnis-Begrenzungssatz um einen vorab eingestellten Wert eines zweiten Leistungsverhältnisses handelt, wobei es sich beim zweiten Leistungsverhältnis um ein Verhältnis einer Leistung eines zweiten Ursprungs-Steuersignals zu einer Leistung eines zweiten Ursprungs-Pilotsignals in einem durch die Basisstation der Versorgungszelle gesendeten zweiten PDCCH-Ursprungssignal handelt, wobei
die Sendeeinheit (802) ferner dafür konfiguriert ist, das zweite PDCCH-Ursprungssignal an das Endgerät zu senden, wobei es sich bei einem aktuellen Wert des zweiten Leistungsverhältnisses des zweiten PDCCH-Ursprungssignals um ein aus dem zweiten Leistungsverhältnis-Begrenzungssatz ausgewähltes Element handelt.

**9.** Basisstation nach Anspruch 8, wobei die Sendeeinheit (802) insbesondere konfiguriert ist, um:
den zweiten Leistungsverhältnis-Begrenzungssatz und den ersten Leistungsverhältnis-Begrenzungssatz unter Verwendung einer Signalisierung höherer Schichten an das Endgerät zu senden.

**10.** Basisstation nach Anspruch 8 oder 9, wobei die Sendeeinheit (802) insbesondere konfiguriert ist, um:

mehrere dem zweiten PDCCH-Ursprungssignal entsprechende Ressourceneinheiten entsprechend dem Endgerät zu einer Ressourceneinheitengruppe zu gruppieren,
ein Element aus dem zweiten Leistungsverhältnis-Begrenzungssatz für die Ressourceneinheitengruppe gemäß einer vorab eingestellten Regel auszuwählen und das zweite Leistungsverhältnis des zweiten PDCCH-Ursprungssignals in der Ressourceneinheitengruppe gemäß dem ausgewählten Element auf den aktuellen Wert zu konfigurieren und das zweite PDCCH-Ursprungssignal unter Verwendung der Ressourceneinheitengruppe an das Endgerät zu senden.

**11.** Endgerät (900), umfassend:

eine Empfangseinheit (901), die dafür konfiguriert ist, einen durch eine Basisstation mindestens einer Störzelle vorab eingestellten und durch eine Basisstation einer Versorgungszelle gesendeten ersten Leistungsverhältnis-Begrenzungssatz und einen durch die Basisstation der Versorgungszelle vorab eingestellten und durch die Basisstation der Versorgungszelle gesendeten zweiten Leistungsverhältnis-Begrenzungssatz zu empfangen, wobei es sich bei einem Element im ersten Leistungsverhältnis-Begrenzungssatz um einen vorab eingestellten Wert eines ersten Leistungsverhältnisses handelt, wobei es sich beim ersten Leistungsverhältnis um ein Verhältnis einer Leistung eines ersten Ursprungs-Steuersignals zu einer Leistung eines ersten Ursprungs-Pilotsignals in einem durch die Basisstation der Störzelle unter Verwendung eines ersten Übertragungskanals gesendeten ersten Physical-Downlink-Control-Channel-, PDCCH-, Ursprungs signal handelt, wobei es sich bei einem Element im zweiten Leistungsverhältnis-Begrenzungssatz um einen vorab eingestellten Wert eines zweiten Leistungsverhältnisses handelt, wobei es sich beim zweiten Leistungsverhältnis um ein Verhältnis einer Leistung eines zweiten Ursprungs-Steuersignals zu einer Leistung eines zweiten Ursprungs-Pilotsignals in einem durch die Basisstation der Versorgungszelle unter Verwendung eines zweiten Übertragungskanals gesendeten zweiten PDCCH-Ursprungssignal handelt, wobei

die Empfangseinheit (901) ferner dafür konfiguriert ist, ein PDCCH-Signal zu empfangen, wobei das PDCCH-Signal ein zweites PDCCH-Signal, das an das Endgerät unter Verwendung des zweiten Übertragungskanals übertragen wird und dem durch die Basisstation der Versorgungszelle gesendeten zweiten PDCCH-Ursprungssignal entstammt, und ein erstes PDCCH-Signal umfasst, das an das Endgerät unter Verwendung des ersten Übertragungskanals übertragen wird und dem durch die Basisstation der Störzelle gesendeten ersten PDCCH-Ursprungssignal entstammt, und

eine Verarbeitungseinheit (902), die dafür konfiguriert ist, das PDCCH-Signal entsprechend dem ersten Leistungsverhältnis-Begrenzungssatz und dem zweiten Leistungsverhältnis-Begrenzungssatz zu demodulieren, um das zweite PDCCH-Ursprungssignal zu beziehen.

12. Endgerät nach Anspruch 11, wobei die Empfangseinheit (901) insbesondere konfiguriert ist, um:
eine durch die Basisstation der Versorgungszelle gesendete Signalisierung höherer Schichten zu empfangen, wobei die Signalisierung höherer Schichten den ersten Leistungsverhältnis-Begrenzungssatz und den zweiten Leistungsverhältnis-Begrenzungssatz enthält.

13. Endgerät nach Anspruch 11 oder Anspruch 12, wobei die Verarbeitungseinheit (902) insbesondere konfiguriert ist, um:

das erste Leistungsverhältnis und das zweite Leistungsverhältnis gemäß einem vorab eingestellten Schätzalgorithmus, dem ersten Leistungsverhältnis-Begrenzungssatz und dem zweiten Leistungsverhältnis-Begrenzungssatz zu beziehen,
eine erste Kanalmatrix des ersten Übertragungskanals und eine zweite Kanalmatrix des zweiten Übertragungskanals gemäß dem ersten Leistungsverhältnis und dem zweiten Leistungsverhältnis zu beziehen und
das PDCCH-Signal gemäß der ersten Kanalmatrix und der zweiten Kanalmatrix unter Verwendung eines vorab eingestellten Demodulationsalgorithmus zu demodulieren, um das zweite PDCCH-Ursprungssignal zu beziehen.

14. Endgerät nach Anspruch 13, wobei der vorab eingestellte Schätzalgorithmus einen generalisierten Maximum-Likelihood-Algorithmus oder einen Minimum-Energy-Algorithmus umfasst.

15. System, welches die Basisstation nach einem der Ansprüche 8 bis 10 und das Endgerät nach einem der Ansprüche 11 bis 14 umfasst.

## Revendications

1. Procédé d'envoi de signal, dans lequel le procédé comprend de :

obtenir (101), par une station de base d'une cellule de desserte, un premier ensemble de restrictions de rapport de puissance prédéfini par une station de base d'au moins une cellule de brouillage, dans lequel un élément dans le premier ensemble de restrictions de rapport de puissance est une valeur prédéfinie d'un premier rapport de puissance, le premier rapport de puissance est un rapport entre la puissance d'un premier signal de commande d'origine et la puissance d'un premier signal pilote d'origine dans un premier signal de canal de commande de liaison descendante physique, PDCCH, d'origine envoyé par la station de base de la cellule de brouillage en utilisant un premier canal de transmission ;
envoyer (102), par la station de base de la cellule de desserte, un second ensemble de restrictions de rapport de puissance prédéfini par la station de base de la cellule de desserte et le premier ensemble de restrictions de rapport de puissance à un terminal, dans lequel un élément dans le second ensemble de restrictions de rapport de puissance est une valeur prédéfinie d'un second rapport de puissance, le second rapport de puissance est un rapport entre la puissance d'un second signal de commande d'origine et la puissance d'un second signal pilote d'origine dans un second signal PDCCH d'origine envoyé par la station de base de la cellule desserte ; et envoyer (103, 201, 202, 203), par la station de base de la cellule de desserte, le second signal PDCCH d'origine au terminal, dans lequel une valeur actuelle du second rapport de puissance du second signal PDCCH d'origine est un élément sélectionné parmi le second ensemble de restrictions de rapport de puissance.

2. Procédé selon la revendication 1, dans lequel l'envoi (102), par la station de base de la cellule de desserte, du second ensemble de restrictions de rapport de puissance prédéfini par la station de base de la cellule de desserte et le premier ensemble de restrictions de rapport de puissance au terminal comprend de :
envoyer, par la station de base de la cellule de desserte, le second ensemble de restrictions de rapport de puissance et le premier ensemble de restrictions de rapport de puissance au terminal en utilisant une signalisation de couche supérieure.

3. Procédé selon la revendication 1 ou 2, dans lequel l'envoi (103, 201, 202, 203), par la station de base de la cellule de desserte, du second signal PDCCH d'origine au terminal comprend de :

regrouper (201), par la station de base de la cellule de desserte, de multiples unités de ressources correspondant au second signal PDCCH d'origine correspondant au terminal dans un groupe d'unités de ressources ;
sélectionner (202), par la station de base de la cellule de desserte, un élément du second ensemble de restrictions de rapport de puissance pour le groupe d'unités de ressources conformément à une règle prédéfinie ; et
configurer (203), par la station de base de la cellule de desserte, le second rapport de puissance du second signal PDCCH d'origine dans le groupe d'unités de ressources sur la valeur actuelle en fonction de l'élément sélectionné, et envoyer le second signal PDCCH d'origine au terminal en utilisant le groupe d'unités de ressources.

4. Procédé de démodulation de signal, dans lequel le procédé comprend de :

recevoir (301), par un terminal, un premier ensemble de restrictions de rapport de puissance prédéfini par une station de base d'au moins une cellule de brouillage et envoyé par une station de base d'une cellule de desserte, et un second ensemble de restrictions de rapport de puissance prédéfini par la station de base de la cellule de desserte et envoyé par la station de base de la cellule desserte, dans lequel un élément du premier ensemble de restrictions de rapport de puissance est une valeur prédéfinie d'un premier rapport de puissance, le premier rapport de puissance est un rapport entre la puissance d'un premier signal de commande d'origine et la puissance d'un premier signal pilote d'origine dans un premier signal de canal de commande de liaison descendante physique, PDCCH, d'origine envoyé par la station de base de la cellule de brouillage en utilisant un premier canal de transmission, un élément dans le second ensemble de restrictions de rapport de puissance est une valeur prédéfinie d'un second rapport de puissance, le second rapport de puissance est un rapport entre la puissance d'un second signal de commande d'origine et la puissance d'un second signal pilote d'origine dans un second signal PDCCH d'origine envoyé par la station de base de la cellule de desserte en utilisant un second canal de transmission ;
recevoir (302), par le terminal, un signal PDCCH, dans lequel le signal PDCCH comprend un second signal PDCCH qui est transmis au terminal en utilisant le second canal de transmission et provenant du second signal PDCCH d'origine envoyé par la station de base de la cellule de desserte et un premier signal PDCCH qui est transmis au terminal en utilisant le premier canal de transmission et provenant du premier signal PDCCH d'origine envoyé par la station de base de la cellule de brouillage ; et
démoduler (303), par le terminal, le signal PDCCH en fonction du premier ensemble de restrictions de rapport de puissance et du second ensemble de restrictions de rapport de puissance afin d'obtenir le second signal PDCCH d'origine.

5. Procédé selon la revendication 4, dans lequel la réception (301), par un terminal, d'un premier ensemble de restrictions de rapport de puissance prédéfini par une station de base d'au moins une cellule de brouillage et envoyé par une station de base d'une cellule de desserte et d'un second ensemble de restrictions de rapport de puissance prédéfini par la station de base de la cellule de desserte et envoyé par la station de base de la cellule de desserte comprend de :
recevoir, par le terminal, une signalisation de couche supérieure envoyée par la station de base de la cellule de desserte, dans lequel la signalisation de couche supérieure transporte le premier ensemble de restrictions de rapport de puissance et le second ensemble de restrictions de rapport de puissance.

**6.** Procédé selon la revendication 4 ou 5, dans lequel la démodulation (303), par le terminal, du signal PDCCH en fonction du premier ensemble de restrictions de rapport de puissance et du second ensemble de restrictions de rapport de puissance afin d'obtenir le second signal PDCCH d'origine comprend de :

obtenir, par le terminal, le premier rapport de puissance et le second rapport de puissance conformément à un algorithme d'estimation prédéfini, au premier ensemble de restrictions de rapport de puissance, et au second ensemble de restrictions de rapport de puissance ;
obtenir, par le terminal, une première matrice de canal du premier canal de transmission et une seconde matrice de canal du second canal de transmission en fonction du premier rapport de puissance et du second rapport de puissance ; et
démoduler, par le terminal, le signal PDCCH en fonction de la première matrice de canal et de la seconde matrice de canal en utilisant un algorithme de démodulation prédéfini pour obtenir le second signal PDCCH d'origine.

**7.** Procédé selon la revendication 6, dans lequel l'algorithme d'estimation prédéfini comprend un algorithme généralisé de maximum de vraisemblance ou un algorithme d'énergie minimale.

**8.** Station de base (800), comprenant :

une unité d'obtention (801), configurée pour obtenir un premier ensemble de restrictions de rapport de puissance prédéfini par une station de base d'au moins une cellule de brouillage, dans lequel un élément dans le premier ensemble de restrictions de rapport de puissance est une valeur prédéfinie d'un premier rapport de puissance, le premier rapport de puissance est un rapport entre la puissance d'un premier signal de commande d'origine et la puissance d'un premier signal pilote d'origine dans un premier signal de canal de commande de liaison descendante physique, PDCCH, d'origine envoyé par la station de base de la cellule de brouillage en utilisant un premier canal de transmission ; et
une unité d'envoi (802), configurée pour envoyer un second ensemble de restrictions de rapport de puissance prédéfini par la station de base de la cellule de desserte et le premier ensemble de restrictions de rapport de puissance à un terminal, dans lequel un élément dans le second ensemble de restrictions de rapport de puissance est une valeur prédéfinie d'un second rapport de puissance, le second rapport de puissance est un rapport entre la puissance d'un second signal de commande d'origine et la puissance d'un second signal pilote d'origine dans un second signal PDCCH d'origine envoyé par la station de base de la cellule desserte ; dans lequel l'unité d'envoi (802) est en outre configurée pour envoyer le second signal PDCCH d'origine au terminal, dans lequel une valeur actuelle du second rapport de puissance du second signal PDCCH d'origine est un élément sélectionné parmi le second ensemble de restrictions de rapport de puissance.

**9.** Station de base selon la revendication 8, dans laquelle l'unité d'envoi (802) est spécifiquement configurée pour :
envoyer le second ensemble de restrictions de rapport de puissance et le premier ensemble de restrictions de rapport de puissance au terminal en utilisant une signalisation de couche supérieure.

**10.** Station de base selon la revendication 8 ou 9, dans laquelle l'unité d'envoi (802) est spécifiquement configurée pour :

regrouper de multiples unités de ressources correspondant au second signal PDCCH d'origine correspondant au terminal dans un groupe d'unités de ressources ;
sélectionner un élément du second ensemble de restrictions de rapport de puissance pour le groupe d'unités de ressources conformément à une règle prédéfinie ; et
configurer le second rapport de puissance du second signal PDCCH d'origine dans le groupe d'unités de ressources sur la valeur actuelle en fonction de l'élément sélectionné, et envoyer le second signal PDCCH d'origine au terminal en utilisant le groupe d'unités de ressources.

**11.** Terminal (900) comprenant :

une unité de réception (901), configurée pour recevoir un premier ensemble de restrictions de rapport de puissance prédéfini par une station de base d'au moins une cellule de brouillage et envoyé par une station de base d'une cellule de desserte, et un second ensemble de restrictions de rapport de puissance prédéfini par la station de base de la cellule de desserte et envoyé par la station de base de la cellule desserte, dans lequel un élément du premier ensemble de restrictions de rapport de puissance est une valeur prédéfinie d'un premier rapport de puissance, le premier rapport de puissance est un rapport entre la puissance d'un premier signal de commande d'origine et la puissance d'un premier signal pilote d'origine dans un premier signal de canal de commande de liaison descendante physique, PDCCH, d'origine envoyé par la station de base de la cellule de brouillage en utilisant un premier canal de transmission, un élément dans le second ensemble de restrictions de rapport de puissance est une valeur prédéfinie d'un second rapport de puissance, le second rapport de puissance est un rapport entre la puissance d'un second signal de commande d'origine et la puissance d'un second signal pilote d'origine dans un second signal PDCCH d'origine envoyé par la station de base de la cellule de desserte en utilisant un second canal de transmission, dans lequel

l'unité de réception (901) est en outre configurée pour recevoir un signal PDCCH, dans lequel le signal PDCCH comprend un second signal PDCCH qui est transmis au terminal en utilisant le second canal de transmission et provenant du second signal PDCCH d'origine envoyé par la station de base de la cellule de desserte, et un premier signal PDCCH qui est transmis au terminal en utilisant le premier canal de transmission et provenant du premier signal PDCCH d'origine envoyé par la station de base de la cellule de brouillage ; et

une unité de traitement (902), configurée pour démoduler le signal PDCCH en fonction du premier ensemble de restrictions de rapport de puissance et du second ensemble de restrictions de rapport de puissance afin d'obtenir le second signal PDCCH d'origine.

12. Terminal selon la revendication 11, dans lequel l'unité de réception (901) est spécifiquement configurée pour :
recevoir une signalisation de couche supérieure envoyée par la station de base de la cellule de desserte, dans lequel la signalisation de couche supérieure transporte le premier ensemble de restrictions de rapport de puissance et le second ensemble de restrictions de rapport de puissance.

13. Terminal selon la revendication 11 ou 12, dans lequel l'unité de traitement (902) est spécifiquement configurée pour :

obtenir le premier rapport de puissance et le second rapport de puissance conformément à un algorithme d'estimation prédéfini, au premier ensemble de restrictions de rapport de puissance, et au second ensemble de restrictions de rapport de puissance ;
obtenir une première matrice de canal du premier canal de transmission et une seconde matrice de canal du second canal de transmission en fonction du premier rapport de puissance et du second rapport de puissance ; et démoduler le signal PDCCH en fonction de la première matrice de canal et de la seconde matrice de canal en utilisant un algorithme de démodulation prédéfini, pour obtenir le second signal PDCCH d'origine.

14. Terminal selon la revendication 13, dans lequel l'algorithme d'estimation prédéfini comprend un algorithme généralisé de maximum de vraisemblance ou un algorithme d'énergie minimale.

15. Système comprenant la station de base selon l'une quelconque des revendications 8 à 10 et le terminal selon l'une quelconque des revendications 11 à 14.

FIG. 1

FIG. 2

EP 3 307 006 B1

FIG. 3

27

A base station of a serving cell obtains a first power ratio restriction set preset by a base station of at least one interference cell, where an element in the first power ratio restriction set is a preset value of a first power ratio, the first power ratio is a ratio of power of a first original control signal to power of a first original pilot signal in a first original physical downlink control channel PDCCH signal sent by the base station of the interference cell by using a first transmission channel

101

The base station of the serving cell sends a preset second power ratio restriction set and the first power ratio restriction set to a terminal, where an element in the second power ratio restriction set is a preset value of a second power ratio, the second power ratio is a ratio of power of a second original control signal to power of a second original pilot signal in a second original PDCCH signal sent by the base station of the serving cell

102

The base station of the serving cell sends the second original PDCCH signal to the terminal, where a current value of the second power ratio of the second original PDCCH signal is an element selected from the second power ratio restriction set

103

FIG. 4

A base station of a serving cell groups multiple resource units corresponding to a second original PDCCH signal corresponding to a terminal into a resource unit group — 201

↓

The base station of the serving cell selects an element from a second power ratio restriction set for the resource unit group according to a preset rule — 202

↓

The base station of the serving cell configures a second power ratio of the second original PDCCH signal in the resource unit group to a current value according to the selected element, and sends the second original PDCCH signal to the terminal by using the resource unit group — 203

FIG. 5

A terminal receives a first power ratio restriction set preset by a base station of at least one interference cell and sent by a base station of a serving cell and a second power ratio restriction set preset by the base station of the serving cell and sent by the base station of the serving cell — 301

↓

The terminal receives a PDCCH signal, where the PDCCH signal includes a second PDCCH signal that is transmitted to the terminal by using a second transmission channel and originated from a second original PDCCH signal sent by the base station of the serving cell and a first PDCCH signal that is transmitted to the terminal by using a first transmission channel and originated from a first original PDCCH signal sent by the base station of the interference cell — 302

↓

The terminal demodulates the PDCCH signal according to the first power ratio restriction set and the second power ratio restriction set, to obtain the second original PDCCH signal — 303

FIG. 6

A terminal obtains a first power ratio and a second power ratio according to a preset estimation algorithm, a first power ratio restriction set, and a second power ratio restriction set — 401

The terminal obtains a first channel matrix of a first transmission channel and a second channel matrix of a second transmission channel according to the first power ratio and the second power ratio — 402

The terminal demodulates a PDCCH signal according to the first channel matrix and the second channel matrix by using a preset demodulation algorithm, to obtain a second original PDCCH signal — 403

FIG. 7

800

Base station

Obtaining unit — 801

Sending unit — 802

FIG. 8

900

Terminal

Receiving unit 901

Processing unit 902

FIG. 9

1000

Base station

1003

Memory

1002

Transmitter

Bus 1004

1001

Processor

FIG. 10

1100

Terminal

1103

Memory

1102

Receiver

Bus 1104

1101

Processor

FIG. 11

1200

System

Base
station

Terminal

FIG. 12

**EP 3 307 006 B1**

## REFERENCES CITED IN THE DESCRIPTION

**Patent documents cited in the description**

- US 2015016331 A1

- US 2014301292 A1

**Non-patent literature cited in the description**

- **GREGORY MOROZOV et al.** Blind Maximum Likelihood Interference Mitigation for PDCCH of 3GPP LTE/LTE-A. *2014 IEEE 79th Vehicular Technology Conference,* 18 May 2014